(19) Europäisches Patentamt
European Patent Office
Office européen des brevets

(11) **EP 1 675 881 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(51) Int Cl.:
*C10L 1/198* (2006.01)   *C10L 1/238* (2006.01)
*C10L 1/14* (2006.01)   *C10L 10/08* (2006.01)
*C10L 10/14* (2006.01)   *C10M 145/22* (2006.01)
*C10M 161/00* (2006.01)   *F17D 1/16* (2006.01)
*C08F 8/00* (2006.01)   *C08F 8/14* (2006.01)
*C08F 8/32* (2006.01)   *C08G 81/02* (2006.01)

(21) Anmeldenummer: 04817259.7

(22) Anmeldetag: **15.10.2004**

(86) Internationale Anmeldenummer:
**PCT/DE2004/002315**

(87) Internationale Veröffentlichungsnummer:
**WO 2005/040234 (06.05.2005 Gazette 2005/18)**

(54) **ADDITIV ALS BESTANDTEIL VON MINERALLZUSAMMENSETZUNGEN**

ADDITIVE AS COMPONENT OF MINERAL OIL COMPOSITIONS

ADDITIF UTILISE COMME CONSTITUANT DE COMPOSITIONS D'HUILES MINERALES

(84) Benannte Vertragsstaaten:
**AT BE BG CH CY CZ DE DK EE ES FI FR GB GR HU IE IT LI LU MC NL PL PT RO SE SI SK TR**

(30) Priorität: **22.10.2003 DE 10349862**
**22.10.2003 DE 10349858**

(43) Veröffentlichungstag der Anmeldung:
**05.07.2006 Patentblatt 2006/27**

(73) Patentinhaber: **Innospec Leuna GmbH**
**06237 Leuna (DE)**

(72) Erfinder:
• **TÄUBERT, Hiltrud**
**06667 Leissling (DE)**
• **HAUBOLD, Wolfgang**
**06217 Merseburg (DE)**
• **BÜHLER, Konrad**
**06618 Pödelist (DE)**
• **MEYER, Torsten**
**09113 Chemnitz (DE)**

(74) Vertreter: **Wablat, Wolfgang**
**Patentanwalt**
**Dr. Dr. W. Wablat**
**Potsdamer Chaussee 48**
**14129 Berlin (DE)**

(56) Entgegenhaltungen:
**EP-A- 0 320 766    EP-A- 0 485 773**
**EP-A- 0 485 774    EP-A- 0 903 396**
**DD-A1- 228 288    US-A- 3 491 047**
**US-A- 4 608 411**

• **DATABASE WPI Section Ch, Week 198510 Derwent Publications Ltd., London, GB; Class A18, AN 1985-058959 XP002321595 -& JP 60 015409 A (SUMITOMO CHEM CO LTD) 26. Januar 1985 (1985-01-26)**

EP 1 675 881 B1

**Beschreibung**

Die Erfindung betrifft Mineralölzusammensetzungen mit geringen Anteilen an Additiven sowie ein Verfahren zur Herstellung von Mineralölzusammensetzungen, die das Additiv enthalten.

Mineralölzusammensetzungen aus Mineralölen als Hauptkomponente und geringen Anteilen von Additivmischungen aus üblichen nichtmodifizierten Ethylen-Vinylacetat-Copolymeren, Kohlenwasserstoffpolymeren, veresterten Maleinsäureanhydrid-Olefin-Copolymeren, polaren Stickstoffverbindungen wie Aminsalze von mehrwertigen Carbonsäuren und veresterten Polyoxyalkylenen sind bekannt (WO 94/10 267 A1, WO 95/33 012 A1, EP 0 921 183 A1, WO 93/14 178 A1, EP 0 899 323 A1).

Die Europäische Patentanmeldung EP 0 485 774 A1 beschreibt Erdölmitteldestilate mit verbesserten Fließeigenschaften in der Kälte, welche neben herkömmlichen Fließverbesserern auf Ethylenbasis weitere Copolymere enthalten. Diese umfassen Ethylen-Vinylester-Copolymere, welche mit Maleinsäureanhydrid-Copolymeren gepfropft sind, wobei die Anhydridgruppen teilweise mit Alkanolen und/oder Alkylaminen umgesetzt sein können.

Das US-Patent US 3,491,047 offenbart Kunststoffzusammensetzungen auf Bitumenbasis, worin der Bitumen mit Maleinsäureanhydrid und einem weiteren Polymer umgesetzt wurde.

Der Derwent-Abstract XP-002321595 nennt Zusammensetzungen, welche ein modifiziertes Polyolefin aufweisen. Die Modifizierung erfolgt durch Umsetzung mit einer ungesättigten Carbonsäure oder einem Carbonsäureanhydrid, einer Polyolverbindung und gegebenenfalls einem Fettsäureester einer Polyolkomponente.

Die DD 228 288 A1 offenbart ein Verfahren zur Herstellung von hochviskosen antielektrostatischen Polyamid-6-Formmassen.

Von Nachteil bei den bisher bekannten Mineralölzusammensetzungen sind das unzureichende Fliessverhalten und die Lagerbeständigkeit dieser Mineralölzusammensetzungen bei niedrigen Temperaturen, wenn die Mineralölkomponente einen Schwefelgehalt unter 0,005 Masse% besitzt.

Aufgabe der Erfindung sind Mineralölzusammensetzungen aus Mineralölen als Hauptkomponente und geringen Anteilen an Additiven, die ein verbessertes Fliessverhalten und eine verbesserte Lagerbeständigkeit bei niedrigen Temperaturen besitzen. Durch das verbesserte Fliessverhalten soll eine Energieeinsparung bei den Pumpenaggregaten erreicht werden, durch die der Transport dieser Rezepturen erfolgt. Die Entwicklung der Additive soll unter dem Gesichtspunkt des Einsatzes von Mineralölen mit sehr niedrigem Schwefelgehalt erfolgen, um Treibstoffe verbesserter Umweltverträglichkeit hinsichtlich Schadstoffemission zu erzielen.

Die Aufgabe der Erfindung wurde durch Mineralölzusammensetzungen mit geringen Additivanteilen gelöst, wobei das Additiv erfindungsgemäß ein Esterbindungen enthaltendes Kammpolymer entweder auf Basis von

a) durch Hydroxygruppen oder Glycidylgruppen modifizierte Ethylen-Vinylester-Copolymere mit Molmassengewichtsmitteln von 3000 bis 50000 und einem Ethylenanteil von 50 bis 90 Masse%,
und
b) partiell imidisierten und/oder partiell veresterten Maleinsäureanhydrid-Copolymeren,
ist,
wobei in dem Kammpolymer auf Basis a) und b) die modifizierte Ethylen-Vinylester-Copolymer-Komponente mit der partiell imidisierten und/oder partiell veresterten Maleinsäureanhydrid-Copolymer-Komponente über Esterbindungen verknüpft ist,
oder ein Esterbindungen enthaltendes Kammpolymer auf Basis von
c) durch Säure- und/oder Säureanhydridgruppen modifizierte Ethylen-Vinylester-Copolymere mit Molmassengewichtsmitteln von 3000 bis 50000 und einem Ethylenanteil von 50 bis 90 Masse%,
und
d) partiell mit $C_{12}$-$C_{40}$-Monocarbonsäuren veresterten Polyalkoholen

ist,
wobei in dem Kammpolymer auf Basis von c) und d) die durch Säure- und/oder Säureanhydridgruppen modifizierte Ethylen-Vinylester-Copolymer - Komponente mit der partiell mit $C_{12}$-$C_{40}$-Monocarbonsäuren veresterten Polyalkohol-Komponente über Esterbindungen verknüpft ist,
und wobei der Gehalt des Kammpolymers im Mineralöl 0,005 bis 1 Masse%, und das Masseverhältnis der Segmente Kammpolymersegment a / Kammpolymersegment b auf Basis der Komponenten a und b oder der Segmente Kammpolymersegment c / Kammpolymersegment d auf Basis der Komponenten c und d jeweils 10 : 90 bis 90 : 10 beträgt.

Beispiele für die Vinylesterkomponenten, die in den durch Hydroxygruppen oder Glycidylgruppen oder durch Säure- und/oder Säureanhydridgruppen modifizierten Ethylen-Vinylester-Copolymeren als Basis der Kammpolymere enthalten sein können, sind Vinylacetat, Vinylpropionat, 2-Ethylhexylvinylester, Vinyllaurat, 2-Hydroxyethylvinylester und 4-Hydroxybutylvinylester.
Die durch Hydroxygruppen oder Glycidylgruppen oder durch Säure- und/oder Säureanhydridgruppen modifizierten Ethylen-Vinylester-Copolymere als Basis der Kammpolymere können als weitere ungesättigte Esterkomponenten 1 bis 30 Masse%, bezogen auf den Vinylester, (Meth)acrylsäureester wie Methylmethacrylat, Methylacrylat, Ethylmethacrylat, Butylacrylat, 2-Ethylhexylacrylat, Dodecylacrylat, Ethylenglycoldimethacrylat oder Hydroxyethylmethacrylat und/oder Vinylether wie Octylvinylether oder Hexandiolmonovinylether enthalten.

Bevorzugt sind die durch Hydroxygruppen oder Glycidylgruppen oder durch Säure- und/oder Säureanhydridgruppen modifizierten Ethylen-Vinylester-Copolymere als Basis für die Kammpolymere modifizierte Ethylen-Vinylacetat-Copolymere mit einem Vinylacetat-Gehalt von 12 bis 50 Masse%.

Bevorzugt sind in dem Kammpolymer auf Basis a) und b) die durch Hydroxygruppen modifizierten Ethylen-Vinylester-Copolymere oxidierte Ethylen-Vinylacetat-Copolymere mit Molmassen-Zahlenmitteln von 800 bis 5000 und OH-Zahlen von 10 bis 150 mg KOH/g, oder teilverseifte Ethylen-Vinylacetat-Copolymere mit Molmassen-Zahlenmitteln von 800 bis 5000, bei denen 3 bis 30 Mol% der Vinylacetateinheiten verseift vorliegen, oder Halbacetale von Ethylen-Vinylester-Vinylalkohol-Copolymeren mit Butyraldehyd.

Beispiele für Halbacetale von Ethylen-Vinylester-Vinylalkohol-Copolymeren mit Butyraldehyd sind Halbacetale von Ethylen-Vinylacetat-Vinylalkohol-Copolymeren, die nach DD 295 507 A7 in heterogener Phase mit Butyraldehyd umgesetzt worden sind.

Bevorzugt werden ebenfalls durch Hydroxygruppen oder Glycidylgruppen modifizierte Ethylen-Vinylester-Copolymere in dem Kammpolymer auf Basis a) und b), die 3 bis 20 Masse% polare ungesättigte Monomeren vom Typ Hydroxy-$C_2$-$C_{24}$-alkyl(meth)acrylester oder Glycidyl(meth)acrylester als Comonomerkomponente im Ethylen-Vinylester-Copolymer oder aufgepfropft auf das Ethylen-Vinylester-Copolymer enthalten. Die Herstellung der gepfropften Ethylen-Vinylester-Copolymeren kann durch Umsetzung mit den ungesättigten Monomeren im Extruder (DD 282 462 A5) oder im Rührreaktor (DD 293 125 B5) in Gegenwart von thermisch zerfallenden Radikalbildnern durchgeführt werden. Möglich ist ebenfalls, die Modifizierung bei der Herstellung des Copolymers nach dem Hochdruckverfahren durch Eindosierung der Monomeren in die Polymerschmelze im Niederdruckabscheider oder in den Austragsextruder vorzunehmen.

Die Kammpolymere in den Mineralölzusammensetzungen können bis zu 35 Masse% Poly-$C_6$-$C_{36}$-alkyl(meth) acrylate enthalten.

Beispiele für Maleinsäureanhydrid-Copolymere, die partiell imidiert oder teilverestert als Säurekomponente in den Kammpolymeren auf Basis von a) und b) vorliegen, sind Copolymere aus Maleinsäureanhydrid und den Comonomerkomponenten $C_2$-$C_{20}$-Olefine, $C_8$-$C_{20}$-Vinylaromaten, $C_4$-$C_{21}$-Acrylsäureester, $C_5$-$C_{22}$-Methacrylsäureester, $C_5$-$C_{14}$-Vinylsilane, $C_6$-$C_{15}$-Acrylatsilane, Acrylsäure, Methacrylsäure, Acrylnitril, Vinylpyridin, Vinyloxazolin, Isopropenyloxazolin, Vinylpyrrolidon, Amino-$C_1$-$C_8$-alkyl(meth)-acrylate, $C_3$-$C_{20}$-Vinylester, $C_3$-$C_{20}$-Vinylether und/oder Hydroxy-$C_1$-$C_8$-alkyl(meth)acrylate. Besonders bevorzugte Comonomerkomponenten sind Isobutylen, Diisobutylen, Octadecen, Vinylacetat, Styrol und $\alpha$-Methylstyrol.

Die Maleinsäureanhydrid-Copolymere als Säurekomponente b) in den Kammpolymeren auf Basis von a) und b) besitzen bevorzugt ein Molverhältnis Maleinsäureanhydrid/Comonomer von 1 : 1 bis 1 : 9 und Molmassen-Gewichtsmittel von 5000 bis 500000. Die partielle Imidisierung kann mit Ammoniak, $C_1$-$C_{24}$-Monoal-kylaminen, $C_6$-$C_{18}$-aromatischen Monoaminen, $C_2$-$C_{18}$-Monoaminoalkoholen, monoaminierten Poly ($C_2$-$C_4$-alkylen)oxiden einer Molmasse von 400 bis 3000, und/oder monoveretherten Poly($C_2$-$C_4$-alkylen)oxiden einer Molmasse von 100 bis 10000 erfolgen, wobei das Molverhältnis Anhydridgruppen Copolymer / Ammoniak, Aminogruppen $C_1$-$C_{24}$-Monoalkylamine, $C_6$-$C_{18}$-aromatische Monoamine, $C_2$-$C_{18}$-Monoaminoalkohole bzw. monoaminiertes Poly-($C_2$-$C_4$-alkylen)-oxid und/ oder Hydroxygruppen Poly($C_2$-$C_4$-alkylen)oxid 1 : 1 bis 20 : 1 beträgt.

Beispiele für geeignete Amine, mit denen die Maleinsäureanhydrid-Copolymere als Säurekomponente b) in den Kammpolymeren auf Basis von a) und b) partiell imidisiert sind, sind Monoalkylamine wie Oleylamin, Dodecylamin, Hexadecylamin, Octadecylamin oder Eicosylamin, monosubstituierte Diamine vom Typ N-Dodecyl-1,3-diaminopropan, N-Octadecyl-1,3-diaminopropan oder N-Octadecylpropylentriamin, oder Aminoalkohole wie Aminodecan-10-ol oder Aminohexadecan-16-ol.

Beispiele für geeignete Alkohole, mit denen die Maleinsäureanhydrid-Copolymere als Säurekomponente b) in den Kammpolymeren auf Basis von a) und b) teilverestert sind, sind $C_1$-$C_{18}$-Alkohole wie Methanol, Ethanol, Ethylhexanol oder Stearylalkohol.

Bevorzugt sind die in dem Kammpolymer auf Basis a) und b) über Esterbindungen verknüpft als Komponente b) enthaltenen partiell imidisierten Maleinsäureanhydrid-Copolymere partiell mit $C_6$-$C_{24}$-Monoalkylaminen imidisierte Maleinsäureanhydrid-$\alpha$-Methylstyrol-Copolymere, bei denen das Molverhältnis Anhydridgruppen im Copolymer / gebundenes $C_6$-$C_{24}$-Monoalkylamin im Copolymer 4: 1 bis 1,1 : 1 beträgt.

Beispiele für geeignete Verfahren zur Herstellung der Kammpolymeren auf Basis a) und b), bei denen die modifizierte Ethylen-Vinylester-Copolymer-Komponente a) mit der partiell imidisierten und/oder partiell veresterten Maleinsäureanhydrid-Copolymer-Komponente b) über Esterbindungen verknüpft ist, sind die Umsetzung von durch Hydroxygruppen oder Glycidylgruppen modifizierten Ethylen-Vinylester-Copolymeren mit partiell imidisierten und/oder teilveresterten Maleinsäureanhydrid-Copolymeren in der Schmelze, vorzugsweise in kontinuierlichen Knetern bei Temperaturen von 50 bis 135°C unter Vacuumentgasung, oder in Lösung, vorzugsweise in aromatischen Lösungsmitteln bei 85 bis 140°C.

In dem Kammpolymer auf Basis von c) und d) sind die durch Säuregruppen modifizierten Ethylen-Vinylester-Copolymere bevorzugt oxidierte Ethylen-Vinylacetat-Copolymere mit Molmassen-Zahlenmitteln von 800 bis 5000 und Säurezahlen von 5 bis 40 mg KOH/g.

Die durch Säure- und/oder Säureanhydridgruppen modifizierten Ethylen-Vinylester-Copolymere in dem Kammpolymer auf Basis von c) und d) sind weiterhin bevorzugt Copolymere aus Ethylen, Vinylestern und 1 bis 20 Masse% ungesättigten Carbonsäuren und/oder Carbonsäureanhydriden, insbesondere Acrylsäure, Methacrylsäure und/oder Maleinsäureanhydrid, oder mit 1 bis 20 Masse% ungesättigten Carbonsäuren und/oder Carbonsäureanhydriden, insbesondere Acrylsäure, Methacrylsäure und/oder Maleinsäureanhydrid, gepfropfte Ethylen-Vinylester-Copolymere.

Beispiele für ungesättigte Carbonsäuren, die in den Copolymeren aus Ethylen, Vinylestern und 1 bis 20 Masse% ungesättigten Carbonsäuren der Kammpolymerkomponente c) als Terkomponente und in den gepfropften Ethylen-Vinylester-Copolymeren aufgepfropft enthalten sein können, sind Aconitsäure, Acrylsäure und Methacrylsäure.

Beispiele für ungesättigte Carbonsäureanhydride, die in den Copolymeren aus Ethylen, Vinylestern und 3 bis 20 Masse% ungesättigten Carbonsäureanhydriden der Kammpolymerkomponente c) als Terkomponente und in den gepfropften Ethylen-Vinylester-Copolymeren aufgepfropft enthalten sein können, sind Allylsuccinsäureanhydrid, Bicycloheptendicarbonsäureanhydrid, Bicyclooctendicarbonsäureanhydrid, Carbomethoxymaleinsäureanhydrid, Citraconsäureanhydrid, Cyclohexendicarbonsäureanhydrid, Dodecencylbernsteinsäureanhydrid, Glutaconsäureanhydrid, Itaconsäureanhydrid, Maleinsäureanhydrid, Mesaconsäureanhydrid, Methylbicycloheptendicarbonsäureanhydrid und/oder Methylcyclohexendicarbonsäureanhydrid.

Besonders bevorzugt als ungesättigte Carbonsäuren und/oder Carbonsäureanhydride, die in den Copolymeren aus Ethylen, Vinylestern und 3 bis 20 Masse% ungesättigten Carbonsäuren der Additivkomponente c) als Terkomponente und in den gepfropften Ethylen-Vinylester-Copolymeren aufgepfropft enthalten sein können, sind Acrylsäure, Methacrylsäure und Maleinsäureanhydrid.

Die Herstellung der gepfropften Ethylen-Vinylester-Copolymeren kann durch Umsetzung mit den Säure- oder Säureanhydridgruppen enthaltenden ungesättigten Monomeren im Extruder (DD 282 462 A5) oder im Rührreaktor (DD 293 125 A5) in Gegenwart von thermisch zerfallenden Radikalbildnern durchgeführt werden. Möglich ist ebenfalls, die Modifizierung bei der Herstellung des Copolymers nach dem Hochdruckverfahren durch Eindosierung der Monomeren in die Polymerschmelze im Niederdruckabscheider oder in den Austragsextruder vorzunehmen.

Beispiele für Polyalkohole, die als Alkoholkomponente in den partiell mit $C_{12}$-$C_{40}$-Monocarbonsäuren veresterten Polyalkoholen der Kammpolymerkomponente d) in der Additivmischung enthalten sind, sind Ethylenglycol, Glycerin, 1,1,1-Tris-(hydroxymethyl)propan, Pentaerythrit und Sorbit sowie Polyalkylenglycole mit Molmassen von 500 bis 5000 wie Polyethylenglycol, Polypropylenglycol und Ethylenoxid-Propylenoxid-Copolymere.

Beispiele für $C_{12}$-$C_{40}$-Monocarbonsäuren, die als Carbonsäurekomponente in den partiell mit $C_{12}$-$C_{40}$-Monocarbonsäuren veresterten Polyalkoholen der Kammpolymerkomponente d) enthalten sind, sind Laurinsäure, Palmitinsäure, Stearinsäure, Ölsäure, Elaidinsäure, Ricinolsäure, Eleostearinsäure, Linolsäure, Linolensäure und Erucasäure oder Dimersäuren auf Basis Ölsäure oder Linolensäure.

Bevorzugt werden als partiell mit $C_{12}$-$C_{40}$-Monocarbonsäuren veresterte Polyalkohole als Kammpolymerkomponente d) ebenfalls Mischester von Polyalkoholen, bei denen die Polyalkohole durch Mischungen von $C_{12}$-$C_{40}$-Monocarbonsäuren partiell verestert sind. Spezielle Beispiele für derartige Mischester sind der Monoester von Ethylenglycol mit Dilinolensäure, einer $C_{36}$-Dimersäure, der Monoester von Propylenglycol mit Ölsäure und der Diester von Pentaerythrit mit Stearinsäure.

Die partiell mit $C_{12}$-$C_{40}$-Monocarbonsäuren veresterten Polyalkohole in dem Kammpolymer auf Basis von c) und d) sind bevorzugt Glycerinester von ungesättigten $C_{16}$-$C_{24}$-Monocarbonsäuren, wobei der Anteil von $C_{22}$-Monocarbonsäuren, bezogen auf die Gesamtmasse der $C_{16}$-$C_{24}$ Monocarbonsäuren, 45 bis 52 Masse% beträgt.

Beispiele für geeignete Verfahren zur Herstellung der Kammpolymeren auf Basis von c) und d), bei denen die durch Säure- und/oder Säureanhydridgruppen modifizierte Ethylen-Vinylester-Copolymer - Komponente mit der partiell mit $C_{12}$-$C_{40}$-Monocarbonsäuren veresterten Polyalkohol - Komponente über Esterbindungen verknüpft ist, sind die Umsetzung von durch Säure- und/oder Säureanhydridgruppen modifizierten Ethylen-Vinylester-Copolymeren mit partiell mit $C_{12}$-$C_{40}$-Monocarbonsäuren veresterten Polyalkoholen in der Schmelze, vorzugsweise in kontinuierlichen Knetern bei Temperaturen von 50 bis 135°C unter Vacuumentgasung, oder in Lösung, vorzugsweise in aromatischen Lösungsmitteln bei 85 bis 140°C.

Beispiele für Mineralöle, die die Hauptkomponente in den Mineralölzusammensetzungen bilden, sind Rohöle und Erdöldestillate mit einem Siedebereich von 100 bis 500°C wie Schmieröle, Kerosin, Diesel, Heizöl, schwere Heizöle, Petroleum, Traktorentreibstoff und Crackbenzin. Die Mineralöle können ebenfalls bis 30 Masse% Synthesekohlenwasserstoffe aus der Fischer-Tropsch-Synthese, bis 20 Masse% modifizierte Pflanzenöle auf Basis von Sonnenblumenöl, Sojaöl, Rapsöl, oder Ölen tierischen Ursprungs, Biodiesel und/oder bis 10 Masse% Alkohole wie Methanol oder Ethanol enthalten.

Bevorzugt enthalten die Mineralölzusammensetzungen als Mineralöle Rohöle oder Brennstofföle aus einem Mitteldestillat mit einem Schwefelgehalt unter 0,05 Masse%, insbesondere Heizöle, Gasöle oder Dieselöle.

Die Mineralölzusammensetzungen können insgesamt bis 200 Masse%, bezogen auf das Kammpolymer, weitere Additivkomponente vom Typ Fettsäuregemische, polare Stickstoffverbindungen, bevorzugt Polyamine, Etheramine, Aminoalkohole, Aminsalze, Amide oder Imide von mehrwertigen Carbonsäuren; modifizierte Copolymere von ethylenisch ungesättigten $C_4$-$C_{20}$-Dicarbonsäureanhydriden, nichtmodifizierte Ethylen-Vinylester-Copolymere, $C_7$-$C_{30}$-Alkohole, Polyalkylenglycole, Ester oder Ether von Polyoxyalkylenverbindungen, $C_2$-$C_6$-oxyalkylverbrückte $C_{12}$-$C_{40}$-Monocarbonsäuren, vorzugsweise $C_3$-$C_4$-oxyalkylverbrückte ungesättigte $C_{16}$-$C_{24}$ Monocarbonsäuren mit einem Anteil von $C_{22}$-Monocarbonsäuren, bezogen auf die Gesamtmasse der $C_{16}$-$C_{24}$ Monocarbonsäuren, von 45 bis 52 Masse%, Kohlenwasserstoffpolymere, Alkylphenol-Aldehyd-Copolymere, aromatische Verbindungen mit $C_8$-$C_{100}$-Alkylsubstituenten, carboxylierte Polyamine, Detergentien, Korrosionsinhibitoren, Demulgatoren, Metalldesaktivatoren, Cetanverbesserer, Entschäumer und/oder Cosolventien enthält.

Beispiele für die in den Mineralölzusammensetzungen als weitere Additivkomponenten enthaltenen Fettsäuregemische sind Mischungen aus gesättigten und/oder ungesättigten $C_6$-$C_{40}$-Carbonsäuren wie Laurinsäure, Palmitinsäure, Ölsäure, Linolensäure, Dimerfettsäuren und Alkenylbernsteinsäuren.

Beispiele für die in den Mineralölzusammensetzungen als weitere Additivkomponenten enthaltenen polaren Stickstoffverbindungen vom Typ Polyamine sind N-Hexadecyl-1,3-diaminopropan, N-Octadecyldipropylentriamin, N-Dodecyl-1,3-diaminopropan, N,N'-Didodecyl-1,3-diaminopropan und N,N'-Dioctadecyldipropylentriamin.

Beispiele für die in den Mineralölzusammensetzungen als weitere Additivkomponenten enthaltenen polaren Stickstoffverbindungen vom Typ Etheramine sind 3-Methoxypropylamin, 3-N-Octyloxypropyl-1,3-diaminopropan und 3-N-(2,4,6-trimethyldecyloxypropyl)-1,3-diaminopropan.

Beispiele für die in den Mineralölzusammensetzungen als weitere Additivkomponenten enthaltenen polaren Stickstoffverbindungen vom Typ Aminoalkohole sind Aminopentan-5-ol, Aminoundecan-11-ol und 2-Amino-2-methylpropanol.

Beispiele für die in polaren Stickstoffverbindungen vom Typ Aminsalze, Amide oder Imide von mehrwertigen Carbonsäuren zugrunde liegenden Amine sind $C_8$-$C_{40}$-Amine wie hydriertes Tallamin, Tetradecylamin, Eicosylamin, Dioctadecylamin, Methylbehenylamin, N-Oleyl-1,3-diaminopropan, N-Stearyl-1-methyl-1,3-diaminopropan oder N-Oleyldipropylentriamin.

Beispiele für die in polaren Stickstoffverbindungen vom Typ Aminsalze oder Amide von mehrwertigen Carbonsäuren zugrunde liegenden mehrwertigen Carbonsäuren sind Phthalsäure, Isophthalsäure, Terephthalsäure, Naphthalindicarbonsäure, Ethylendiamintetraessigsäure und Cyclohexandicarbonsäure.

Spezielle Beispiele für die in den Mineralölzusammensetzungen als weitere Additivkomponenten enthaltenen polaren Stickstoffverbindungen vom Typ Aminsalze sind N-Methyltriethanolammoniumdistearylesterchlorid und N-Methyltriethanolammoniumdistearylestermethosulfat.

Beispiele für $C_7$-$C_{30}$-Alkohole, die als weitere Additivkomponenten in den Mineralölzusammensetzungen enthalten sein können, sind Dodecanol, Stearylalkohol und Cerylalkohol.

Beispiele für Polyalkylenglycole, die als weitere Additivkomponenten in den Mineralölzusammensetzungen enthalten sein können, sind Polyethylenglycole, Polypropylenglycole und Ethylenoxid-Propylenoxid-Copolymere mit Molmassen von 500 bis 5000.

Beispiele für ethylenisch ungesättigte $C_4$-$C_{20}$-Dicarbonsäureanhydride, die als Monomerkomponente in den modifizierten Copolymeren aus ethylenisch ungesättigten $C_4$-$C_{20}$-Dicarbonsäureanhydriden als weitere Additivkomponenten enthalten sein können, sind Allylsuccinsäureanhydrid, Bicycloheptendicarbonsäureanhydrid, Bicyclooctendicarbonsäureanhydrid, Carbomethoxymaleinsäureanhydrid, Citraconsäureanhydrid, Cyclohexendicarbonsäureanhydrid, Dodecencylbernsteinsäureanhydrid, Glutaconsäureanhydrid, Itaconsäureanhydrid, Maleinsäureanhydrid, Mesaconsäureanhydrid, Methylbicycloheptendicarbonsäureanhydrid und/oder Methylcyclohexendicarbonsäureanhydrid, bevorzugt werden Maleinsäureanhydrid und/oder Itakonsäureanhydrid.

Beispiele für geeignete Comonomere für ethylenisch ungesättigte $C_4$-$C_{20}$-Dicarbonsäureanhydride, die als Monomerkomponente in den modifizierten Copolymeren aus ethylenisch ungesättigten $C_4$-$C_{20}$-Dicarbonsäureanhydriden als weitere Additivkomponenten enthalten sein können, sind ethylenisch ungesättigten Monomere vom Typ $C_2$-$C_{20}$-Olefine, $C_8$-$C_{20}$-Vinylaromaten, $C_4$-$C_{21}$-Acrylsäureester, $C_5$-$C_{22}$-Methacrylsäureester, $C_5$-$C_{14}$-Vinylsilane, $C_6$-$C_{15}$-Acrylatsilane, Acrylsäure, Methacrylsäure, Acrylnitril, Vinylpyridin, Vinyloxazolin, Isopropenyloxazolin, Vinylpyrrolidon, Amino-$C_1$-$C_8$-alkyl-(meth)acrylate, $C_3$-$C_{20}$-Vinylester, $C_3$-$C_{20}$-Vinylether und/oder Hydroxy-$C_1$-$C_8$-alkyl-(meth)acrylate. Besonders bevorzugte ethylenisch ungesättigte Monomere sind Isobutylen, Diisobutylen, Vinylacetat, Styrol und $\alpha$-Methylstyrol.

Besonders bevorzugt sind als modifizierten Copolymere Copolymere aus $C_4$-$C_{20}$-ethylenisch ungesättigten Säureanhydriden und ethylenisch ungesättigten Monomeren mit einem Molverhältnis von 1 : 1 bis 1 : 9 und MolmassenGewichtsmitteln von 5000 bis 500000, die mit Ammoniak, $C_1$-$C_{24}$-Monoalkylaminen, $C_6$-$C_{18}$-aromatischen Monoaminen, $C_2$-$C_{18}$-Monoaminoalkoholen, monoaminierten Poly($C_2$-$C_4$-alkylen)oxiden einer Molmasse von 400 bis 3000, und/oder monoveretherten Poly($C_2$-$C_4$-alkylen)oxiden einer Molmasse von 100 bis 10000 umgesetzt worden sind, wobei das Molverhältnis Anhydridgruppen Copolymer / Ammoniak, Aminogruppen $C_1$-$C_{24}$-Monoalkylamine, $C_6$-$C_{18}$-aromatische Monoamine, $C_2$-$C_{18}$-Monoaminoalkohole bzw. monoaminiertes Poly-($C_2$-$C_4$-alkylen)oxid 1 : 1 bis 20 : 1 beträgt.

Insbesondere geeignet als weitere Additivkomponenten in Form von modifizierten Copolymeren aus ethylenisch ungesättigten $C_4$-$C_{20}$-Dicarbonsäureanhydriden sind mit $C_{12}$-$C_{24}$-Monoalkylaminen wie Oleylamin, Dodecylamin, Hexadecylamin, Octadecylamin oder Eicosylamin, monosubstituierten Diaminen vom Typ N-Dodecyl-1,3-diaminopropan, N-Octadecyl-1,3-diaminopropan oder N-Octadecyl-propylentriamin oder Aminoalkoholen wie Aminodecan-10-ol oder Aminohexadecan-16-ol imidisierte Maleinsäureanhydrid-Copolymere.

Die $C_2$-$C_6$-oxyalkylverbrückten $C_{12}$-$C_{40}$-Monocarbonsäuren, die als weitere Additive in den Mineralölzusammensetzungen enthalten sein können, bestehen aus einer $C_2$-$C_6$-Polyalkoholkomponente und einer $C_{12}$-$C_{40}$-Monocarbonsäurekomponente.

Beispiele für Polyalkohole, die als Alkoholkomponente in den $C_2$-$C_6$-oxyalkylverbrückten $C_{12}$-$C_{40}$-Monocarbonsäuren enthalten sein können, sind Ethylenglykol, Polyalkylenglykole, Glycerin, 1,1,1-Tris-(hydroxymethyl)propan, Pentaerythrit und Sorbit.

Beispiele für $C_{12}$-$C_{40}$-Monocarbonsäuren, die als Carbonsäurekomponente in den $C_2$-$C_6$-oxyalkylverbrückten $C_{12}$-$C_{40}$-Monocarbonsäuren enthalten sein können, sind Laurinsäure, Palmitinsäure, Stearinsäure, Ölsäure, Elaidinsäure, Ricinolsäure, Eleostearinsäure, Linolsäure, Linolensäure und Erucasäure oder Dimersäuren auf Basis Ölsäure oder Linolensäure.

Die Mineralölzusammensetzungen mit geringen Additivanteilen werden nach einem Verfahren hergestellt, bei dem erfindungsgemäß Mineralölzusammensetzungen, die als Additiv ein Esterbindungen enthaltendes Kammpolymer entweder auf Basis von

a) durch Hydroxygruppen oder Glycidylgruppen modifizierte Ethylen-Vinylester-Copolymere mit Molmassengewichtsmitteln von 3000 bis 50000 und einem Ethylenanteil von 50 bis 90 Masse%,
und
b) partiell imidisierten und/oder partiell veresterten Maleinsäureanhydrid- Copolymeren,
ist,
wobei in dem Kammpolymer auf Basis a) und b) die modifizierte Ethylen-Vinylester-Copolymer-Komponente mit der partiell imidisierten und/oder partiell veresterten Maleinsäureanhydrid-Copolymer-Komponente über Esterbindungen verknüpft ist,
oder ein Esterbindungen enthaltendes Kammpolymer auf Basis von
c) durch Säure- und/oder Säureanhydridgruppen modifizierte Ethylen-Vinylester-Copolymere mit Molmassengewichtsmitteln von 3000 bis 50000 und einem Ethylenanteil von 50 bis 90 Masse%,
und
d) partiell mit $C_{12}$-$C_{40}$-Monocarbonsäuren veresterten Polyalkoholen
ist,

wobei in dem Kammpolymer auf Basis von c) und d) die durch Säure- und/oder Säureanhydridgruppen modifizierte Ethylen-Vinylester-Copolymer - Komponente mit der partiell mit $C_{12}$-$C_{40}$-Monocarbonsäuren veresterten Polyalkohol - Komponente über Esterbindungen verknüpft ist,
und wobei der Gehalt des Kammpolymers im Mineralöl 0,005 bis 1 Masse%, und das Masseverhältnis der Segmente Kammpolymersegment a / Kammpolymersegment b auf Basis der Komponenten a und b oder der Segmente Kammpolymersegment c / Kammpolymersegment d auf Basis der Komponenten c und d jeweils 10 : 90 bis 90 : 10 beträgt, nach einem Vorhomogenisierungsverfahren hergestellt werden, bei dem

- in der ersten Verfahrensstufe 1 bis 60 Masse% Kammpolymer enthal-tende Lösungen in Mineralöl-Mitteldestillaten bei 20 bis 90°C hergestellt werden, und
- in der zweiten Verfahrensstufe die das Kammpolymer enthaltenden Lösungen mit dem Mineralöl als Hauptkomponente homogenisiert werden,

wobei dem Mineralöl insgesamt 0 bis 200 Masse%, bezogen auf das Kammpolymer, weitere Additivkomponenten in der ersten oder zweiten Verfahrensstufe zugesetzt werden.

Die Mineralölzusammensetzungen mit geringen Additivanteilen sind insbeson-dere als bei niedrigen Temperaturen zu transportierende fließfähige Medien und als Mineralölkraftstoff hoher Fliessfähigkeit geeignet.

Die Erfindung wird durch nachfolgende Beispiele erläutert.

**BEISPIELE**

Die Kennzahlen wurden nach folgenden Prüfverfahren ermittelt :

Cloud Point (CP) : DIN EN 23 015
Cold Filter Plugging Point (CFPP) : EN 116
Siedeanalyse : EN ISO 3405, ASTM D 86
IBP : Initial Boiling Point
FBP : Final Boiling Point

Vinylacetatgehalt : modifiziertes Verfahren nach ISO 8995, DIN 16778 Teil 2 :

2 g Probe werden auf 0,001 g genau eingewogen und in einem 300 ml Erlenmeyerkolben mit 70 ml destilliertem Xylen und 2 Siedeperlen rd. 15 min unter Erwärmung am Rückflusskühler gelöst. Anschließend werden rd. 30 ml Ethanol langsam durch den Rückflusskühler zugegeben, der Erlenmeyerkolben wird von der Heizplatte genommen, es werden 30 ml Ethanol, 0,5 n KOH aus der Bürette und 2 Siedeperlen hinzugefügt, und die Probe wird 1 h am Rückfluss gekocht. Danach wird die Probe erneut vom Rückfluss genommen, mit 30 ml methanolisch-wässriger 0,5 n HCl und 2 Siedeperlen versetzt und 15 min am Rückfluss weitergekocht. Die Probe wird anschließend nach Zugabe von 2 bis 3 Tropfen Phenolphthalein-Lösung (1 Masse% in Ethanol) mit ethanolischer 0,5 n KOH tropfenweise unter Schütteln bis zum Farbumschlag nach rot titriert. Parallel dazu ist ein Blindwert zu ermitteln.

$$\text{Vinylacetatgehalt in Masse\%} = \frac{(V - BW) \times F \times 43}{10 \times E}$$

E = Einwaage in g
F = Faktor der ethanolischen 0,5 n KOH
V = Verbrauch in ml an 0,5 n ethanolischer KOH für die Probe
B = Verbrauch in ml an 0,5 n ethanolischer KOH für den Blindwert

Kurzzeitsediment-Test :

Zur Überprüfung der Sedimentationsneigung auskristallisierter Paraffine im Mineralöl wird eine 500 ml - Probe 16 h in einem Messzylinder gelagert und anschließend die oben anstehenden 80 Vol% der Probe abgesaugt und verworfen. Die verbliebenen 20 Vol% der Probe (100 ml) werden bei 40°C homogenisiert und davon der Cloud Point (CP) nach DIN EN 23 015 bestimmt.

SEDAB Filtrations-Test :

Eine 500 ml-Mineralölprobe wird 20 x vertikal geschüttelt, 16 h bei 10°C temperiert, 10 x vertikal geschüttelt, und die gesamte Probe wird auf einmal durch ein Filter aus Cellulosenitrat (Durchmesser 50 mm, Porengrösse 0,8 μm), die auf einen Saugtopf mit einem Vacuum von rd. 200 hPa aufgesetzt ist, filtriert. Ermittelt wird die Zeit (s), in der die Probe durch das Filter läuft. Der SEDAB-Filtrationstest gilt als bestanden, wenn die Probe in einem zeitraum < 120 s das Filter passiert.

Beispiel 1

1.1 Ausgangsprodukte

1.1.1 Unadditivierter Diesel

Charge : 16080601 Test DK 1
Charakterisierung :

Cloud Point (CP): +6 °C ;
Cold Filter Plugging Point (CFPP) : +2 °C

Siedeanalyse :

| Destillierte Menge (Vol.-%) / Temperatur (°C) | | | | | | | | | | |
|---|---|---|---|---|---|---|---|---|---|---|
| IBP | 10 | 20 | 30 | 40 | 50 | 60 | 70 | 80 | 90 | FBP |
| 189 | 243 | 259 | 271 | 281 | 292 | 303 | 317 | 334 | 357 | 385 |

1.1.2 Additiv: Kammpolymer auf Basis von a) und b)

Kammpolymer aus Hydroxyethylmethacrylat-gepfropftem Ethylen-Vinylacetat-Copolymerwachs a) (Vinylace-tatgehalt 32 Masse%, Gehalt an Hydroxyethyl-methacrylat 4 Masse%, Molmassen-Gewichtsmittel 4500 g/mol) und einem mit $C_{16}$-$C_{18}$-Fettamin teilimidisierten α-Methylstyrol-Maleinsäureanhydrid-Copolymer b) (Molverhältnis 1,3 : 1,0, Säurezahl 27, Molmassen-Zahlenmittel 9500)

Synthese des gepfropften Copolymerwachses als Kammpolymerkomponente a)

Ethylen-Vinylacetat-Copolymerwachs (Hersteller LEUNA Polymer GmbH, Vinylacetatgehalt 32 Masse%, Molmassen-Gewichtsmittel 2300 g/mol), mit 0,2 Masse% Talkum gepudert, wird nach DD 282 462 A5 bei 90°C im Extruder durch Eindosierung von 2 Masse% Azoisobuttersäuredinitril enthaltendem Hydroxyethylmethacrylat gepfropft und die Schmelze des Pfropfcopolymers auf eine Pastillierungsanlage mit Kühlband aufgegeben, in Pastillen ausgeformt und mit 0,2 Masse% Talkum gepudert.

Herstellung des Kammpolymers aus a) und b)

In den Einzugtrichter eines Werner&Pfleiderer - Doppelschneckenextruders ZSK 30, L/D 48, mit Seitenstromdosiereinrichtung für flüssige Medien und zwei Vacuumentgasungszonen, wird über eine Dosierbandwaage ein mit $C_{16}$-$C_{18}$-Fettamin teilimidisiertes α-Methylstyrol-Maleinsäureanhydrid-Copolymer b) (Molverhältnis 1,3 : 1,0, Säurezahl 27, Molmassen-Zahlenmittel 9500) mit 3,0 kg/h dosiert und bei 95°C aufgeschmolzen. Über die Seitenstromdosierung wird mit 2,1 kg/h aus einem bei 115°C beheizten Vorratstank mit Hydroxy-ethylmethacrylat-gepfropftes Ethylen-Vinylacetat-Copolymerwachs a) (Vinylace-tatgehalt 32 Masse%, Gehalt an Hydroxyethylmethacrylat 4 Masse%, Molmassen-Gewichtsmittel 4500 g/mol) in die Schmelze dosiert, in der ersten Reaktions-zone (Verweilzeit 4,5 min) bei 120°C umgesetzt, entgast, in der zweiten Reaktionszone bei 130°C (Verweilzeit 3,5 min) umgesetzt, entgast, bei 100°C mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

Das resultierende Kammpolymer besitzt eine Säurezahl von 3,5 und einen Schmelzbereich von 72 bis 79°C.

1.1.3 Weitere Additivkomponenten

Ethylacrylat-Octadecylacrylat-Copolymer (Molverhältnis 2 : 1, Molmassen-Zah-lenmittel 7500)

1.2 Herstellung der Additivkomponenten enthaltenden Lösungen in Mineral-öl-Mitteldestillaten

In einem Rührbehälter werden 50 kg einer 50%igen Lösung des Kammpolymers auf Basis von a) und b) in einem aromatischen Kohlenwasserstoffgemisch (Solvesso), 25 kg der weiteren Additivkomponente Glycerindioleylester und 15 kg einer 20%igen Lösung der weiteren Additivkomponenten Ethylacrylat-Octadecylacrylat-Copolymer in Toluol 120 min bei 65°C gerührt, und die Mischung in einen Vorratstank überführt.

1.3 Herstellung der Mineralölzusammensetzungen

In einen Produktstrom nichtadditiviertem Diesel Charge 16080601 bei 800 kg/min wird mit 0,48 kg/min die Additivlösung nach 1.2 eingespritzt und in einen Lagertank überführt.

Die Ausprüfung der Kältebeständigkeit der Mineralölrezeptur ergibt einen CFPP-Wert von -16°C. Der CP-Wert des Kurzzeitsediment-Tests beträgt +6°C. Der SEDAB Filtrations-Test gilt als bestanden (500 ml in 88 s).

Wird unter gleichen Bedingungen eine Mineralölrezeptur hergestellt, die ausschließlich das nichtmodifizierte Ethylen-Vinylacetat-Copolymerwachs als Additiv enthält, so beträgt der CFPP-Wert -3°C. Der CP-Wert des Kurzzeitsediment-Tests beträgt +10°C. Der SEDAB Filtrations-Test gilt als nicht bestanden (471 ml in >120 s).

Beispiel 2

2.1 Ausgangsprodukte

2.1.1 Unadditivierter Diesel

Charge : 030210 Test DK 2
Charakterisierung :

Cloud Point (CP): +7 °C ;
Cold Filter Plugging Point (CFPP) : +2 °C

Siedeanalyse :

| Destillierte Menge (Vol.-%) / Temperatur (°C) | | | | | | | | | | |
|------|------|------|------|------|------|------|------|------|------|------|
| IBP | 10 | 20 | 30 | 40 | 50 | 60 | 70 | 80 | 90 | FBP |
| 235 | 266 | 279 | 291 | 301 | 310 | 320 | 337 | 342 | 357 | 374 |

2.1.2 Additiv: Mischung des Kammpolymer auf Basis von a) und b) mit Copolymerwachs

Mischung aus 15 Masse% Ethylen-Vinylacetat-Copolymerwachs (Hersteller LEUNA Polymer GmbH, Vinylacetatgehalt 29,5 Masse%, Molmassen-Zahlenmittel 2015 g/mol) und 85 Masse% eines Kammpolymers aus einem oxidierten Ethylen-Vinylacetat-Copolymerwachs a) (Molmassen-Gewichtsmittel 1.150 g/mol, Säurezahl 6 mg KOH/g, OH-Zahl 32 mg KOH/g) und einem partiell mit Dodecylalkohol veresterten Maleinsäureanhydrid-Octadecen-Copolymer b) (Molverhältnis 1,6 : 1, Säurezahl 32, Schmelzpunkt 49 bis 52°C).

Herstellung des Kammpolymers auf Basis von a) und b)

In den Einzugstrichter eines Werner&Pfleiderer - Doppelschneckenextruders ZSK 30, L/D 48, mit Seitenstromdosiereinrichtung für flüssige Medien und zwei Vacuumentgasungszonen, wird über eine Dosierbandwaage ein partiell mit Do-decylalkohol verestertes Maleinsäureanhydrid-Octadecen-Copolymer b) (Mol-verhältnis 1,6 : 1, Säurezahl 32, Schmelzpunkt 49 bis 52°C) mit 3,2 kg/h dosiert und bei 85°C aufgeschmolzen. Über die Seitenstromdosierung wird mit 2,85 kg/h aus einem bei 105°C beheizten Vorratstank ein oxidiertes Ethylen-Vinylacetat-Copolymerwachs a) (Molmassen-Gewichtsmittel 1150 g/mol, Säurezahl 6 mg KOH/g, OH-Zahl 32 mg KOH/g) in die Schmelze dosiert, in der ersten Reaktionszone (Verweilzeit 4,5 min) bei 120°C umgesetzt, entgast, in der zweiten Reaktionszone bei 130°C (Verweilzeit 3,5 min) umgesetzt, entgast, bei 100°C mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.
Das resultierende Kammpolymer besitzt eine Säurezahl von 2,5 und einen Schmelzbereich von 58 bis 66°C.

2.1.3 Weitere Additivkomponenten

Pentaerythrittrierucasäureester Ethylacrylat-Octadecylacrylat-Copolymer (Molverhältnis 2 : 1, Molmassen-Zah-lenmittel 13500)

2.2 Herstellung der Additivkomponenten enthaltenden Lösungen in Mineralöl-Mitteldestillaten

In einem Rührbehälter werden 25 kg einer 60%igen Lösung der Mischung des Kammpolymers auf Basis von a) und b) mit Copolymerwachs in $C_8$-$C_9$-Diesel-Aromatenfraktion, 10 kg der weiteren Additivkomponente Pentaerythrittrierucasäureester und 7 kg einer 20%igen Lösung der weiteren Additiv-komponente Ethylacrylat-Octadecylacrylat-Copolymer in Toluol 120 min 65°C gemischt, und die Mischung in einen Vorratstank überführt.

2.3 Herstellung der Mineralölzusammensetzungen

In einen Produktstrom nichtadditiviertem Diesel Charge 030210 bei 800 kg/min wird mit 0,12 kg/min die Additivlösung nach 2.2 eingespritzt und in einen Lagertank überführt.

Die Ausprüfung der Kältebeständigkeit der Mineralölrezeptur ergibt einen CFPP-Wert von -8°C. Der CP-Wert des Kurzzeitsediment-Tests beträgt +7°C. Der SEDAB Filtrations-Test gilt als bestanden (500 ml in 85 s).

Wird unter gleichen Bedingungen eine Mineralölrezeptur hergestellt, die ausschliesslich das Copolymerwachs als Additiv enthält, so beträgt der CFPP-Wert -5°C. Der CP-Wert des Kurzzeitsediment-Tests beträgt +12°C. Der SEDAB Filtrations-Test gilt als nicht bestanden (468 ml in >120 s).

Beispiel 3

3.1 Ausgangsprodukte

3.1.1 Unadditiviertes Heizöl

Charge : 030225 Test HEL 1
Charakterisierung :

    Cloud Point (CP): +1 °C ;
    Cold Filter Plugging Point (CFPP) : -1 °C

Siedeanalyse :

| Destillierte Menge (Vol.-%) / Temperatur (°C) | | | | | | | | | | |
|------|------|------|------|------|------|------|------|------|------|------|
| IBP | 10 | 20 | 30 | 40 | 50 | 60 | 70 | 80 | 90 | FBP |
| 165 | 196 | 213 | 230 | 249 | 269 | 290 | 310 | 327 | 344 | 363 |

3.1.2 Additiv: Mischung des Kammpolymer auf Basis von a) und b) mit Copolymerwachs

Mischung aus 25 Masse% Ethylen-Vinylacetat-Copolymerwachs (CW2) (Herstel-ler LEUNA Polymer GmbH, Vinylacetatgehalt 32 Masse%, Molmassen-Gewichts-mittel 2300 g/mol) als weitere Additivkomponente und 75 Masse% eines Kammpolymers aus einem teilverseiften Ethylen-Vinylacetat-Copolymerwachs a3) (Molmassen-Gewichtsmittel 850 g/mol, OH-Zahl 16) und einem mit $C_{16}$-$C_{18}$-Fettamin teilimidisierten Maleinsäureanhydrid-Styrol-Copolymer b) (Molver-hältnis 1 : 2, Säurezahl 19, Schmelzpunkt 55 bis 59°C).

Herstellung des Kammpolymers aus a) und b)

In den Einzugtrichter eines Werner&Pfleiderer - Doppelschneckenextruders ZSK 30, L/D 48, mit Seitenstromdosiereinrichtung für flüssige Medien und zwei Vacuumentgasungszonen, wird über eine Dosierbandwaage ein mit $C_{16}$-$C_{18}$-Fettamin teilimidisiertes Maleinsäureanhydrid-StyrolCopolymer b) (Molver-hältnis 1 : 2, Säurezahl 19, Schmelzpunkt 55 bis 59°C) mit 4,2 kg/h dosiert und bei 90°C aufgeschmolzen. Über die Seitenstromdosierung wird mit 3,15 kg/h aus einem bei 105°C beheizten Vorratstank ein teilverseiftes Ethylen-Vinylacetat-Copolymerwachs a) (Molmassen-Gewichtsmittel 850 g/mol, OH-Zahl 16) in die Schmelze dosiert, in der ersten Reaktionszone (Verweilzeit 4,5 min) bei 120°C umgesetzt, entgast, in der zweiten Reaktionszone bei 130°C (Verweilzeit 3,5 min) umgesetzt, entgast, bei 100°C mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

Das resultierende Kammpolymer besitzt eine Säurezahl von 2,0 und einen Schmelzbereich von 65 bis 74°C.

3.1.3 Weitere Additivkomponenten

Ethylenglycoldiölsäureester Polyethylenglycol Molmasse 1500

3.2 Herstellung der Additivkomponenten enthaltenden Lösungen in Mineral-öl-Mitteldestillaten

In einem Rührbehälter werden 25 kg einer 60%igen Lösung der Mischung des Kammpolymers auf Basis von a) und b) mit Copolymerwachs in $C_8$-$C_9$-Diesel-Aromatenfraktion, 9 kg der weiteren Additivkomponente Ethylenglycoldiöl-säureester und 4 kg der weiteren Additivkomponente Polyethylenglycol (Molmasse 1500) 120 min bei 65°C gemischt, und die Mischung auf Raumtemperatur abgekühlt und in einen Vorratstank überführt.

3.3 Herstellung der Mineralölzusammensetzungen

In einen Produktstrom nichtadditiviertem Heizöl Charge 030225 bei 800 kg/min wird mit 0,24 kg/min die Additivlösung nach 3.2 eingespritzt und in einen Lagertank überführt.
Die Ausprüfung der Kältebeständigkeit der Mineralölrezeptur ergibt einen CFPP-Wert von -15°C.
Wird unter gleichen Bedingungen eine Mineralölrezeptur hergestellt, die ausschließlich das nichtmodifizierte Copolymerwachs als Additiv enthält, so beträgt der CFPP-Wert -12°C.

Beispiel 4

4.1 Ausgangsprodukte

4.1.1 Unadditivierter Diesel

Charge : 16080601 Test DK 1
Charakterisierung :

Cloud Point (CP): +6 °C ;
Cold Filter Plugging Point (CFPP) : +2 °C

Siedeanalyse :

| Destillierte Menge (Vol.-%) / Temperatur (°C) | | | | | | | | | | |
|------|------|------|------|------|------|------|------|------|------|------|
| IBP | 10 | 20 | 30 | 40 | 50 | 60 | 70 | 80 | 90 | FBP |
| 189 | 243 | 259 | 271 | 281 | 292 | 303 | 317 | 334 | 357 | 385 |

4.1.2 Additiv: Mischung des Kammpolymer auf Basis von a) und b) mit Copolymerwachs

Mischung aus 25 Masse% Ethylen-Vinylacetat-Copolymerwachs (Hersteller LEUNA Polymer GmbH, Vinylacetatgehalt 32 Masse%, Molmassen-Gewichts-mittel 2300 g/mol), und 75 Masse% eines Kammpolymers aus einem Ethylen-Vinylacetat-Glycidylmethacrylat-Terpolymerwachs a) (Vinylacetatgehalt 28 Mas-se%, Gehalt an Glycidylmethacrylat 3,5 Masse%, Molmassen-Gewichtsmittel 4200 g/mol) und einem mit $C_{16}$-$C_{18}$-Fettamin teilimidisierten Octa-decen-Malein-säureanhydrid-Copolymer b) (Molverhältnis 1 : 1,5, Säurezahl 25, Molmassen-zahlenmittel 1800)

Herstellung des Kammpolymers aus a) und b)

In den Einzugstrichter eines Werner&Pfleiderer - Doppelschneckenextruders ZSK 30, L/D 48, mit Seitenstromdosiereinrichtung für flüssige Medien und zwei Vacuumentgasungszonen, wird über eine Dosierbandwaage ein mit $C_{16}$-$C_{18}$-Fettamin teilimidisiertes Octadecen-Maleinsäureanhydrid-Copolymer b) (Molver-hältnis 1 : 1,5, Säurezahl 25, Molmassenzahlenmittel 1800) mit 2,9 kg/h dosiert und bei 95°C aufgeschmolzen. Über die Seitenstromdosierung wird mit 3,0 kg/h aus einem bei 100°C beheizten Vorratstank Ethylen-Vinylacetat-Glycidylmeth-acrylat-Terpolymerwachs a) (Vinylacetatgehalt 28 Masse%, Gehalt an Glycidylmethacrylat 3,5 Masse%, Molmassen-Gewichtsmittel 4200 g/mol) in die Schmelze dosiert, in der ersten Reaktionszone (Verweilzeit 4,5 min) bei 115°C umgesetzt, entgast, in der zweiten Reaktionszone bei 130°C (Verweilzeit 3,5 min) umgesetzt, entgast, bei 90°C mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

Das resultierende Kammpolymer besitzt eine Säurezahl von 2,2 und einen Schmelzbereich von 64 bis 72°C.

4.1.3 Weitere Additivkomponenten

Glycerindioleylester Friedel-Krafts-Kondensat aus chloriertem Polyethylenwachs mit Naphthalin, Molmassengewichtsmittel 850

4.2 Herstellung der Additivkomponenten enthaltenden Lösungen in Mineral-öl-Mitteldestillaten

In einem Rührbehälter werden 25 kg einer 50%igen Lösung der Mischung des Kammpolymers aus a) und b) mit Copolymerwachs in einem aromatischen Kohlenwasserstoffgemisch

(Solvesso), 10 kg der weiteren Additivkomponente Glycerindioleylester und 1 kg einer 10%igen Lösung der weiteren Additivkom-ponente Friedel-Krafts-Kondensat aus chloriertem Polyethylenwachs mit Naphthalin in $C_8$-$C_9$-Diesel-Aromatenfraktion 120 min bei 65°C gemischt, und die Mischung in einen Vorratstank überführt.

4.3 Herstellung der Mineralölzusammensetzungen

In einen Produktstrom nichtadditiviertem Diesel Charge 16080601 bei 800 kg/min wird mit 0,48 kg/min die Additivlösung nach 4.2 eingespritzt und in einen Lagertank überführt.

Die Ausprüfung der Kältebeständigkeit der Mineralölrezeptur ergibt einen CFPP-Wert von -10°C.

Wird unter gleichen Bedingungen eine Mineralölrezeptur hergestellt, die ausschließlich das nichtmodifizierte Ethylen-Vinylacetat-Copolymerwachs als Additiv enthält, so beträgt der CFPP-Wert -3°C.

Beispiel 5

5.1 Ausgangsprodukte

5.1.1 Unadditivierter Diesel

Charge : 16080601 Test DK 1
Cloud Point (CP): +6-°C ;
Cold Filter Plugging Point (CFPP) : +2 °C
Lubricity-Test : 563 $\mu$m
Siedeanalyse :

| Destillierte Menge (Vol.-%) / Temperatur (°C) | | | | | | | | | | |
|-----|-----|-----|-----|-----|-----|-----|-----|-----|-----|-----|
| IBP | 10% | 20% | 30% | 40% | 50% | 60% | 70% | 80% | 90% | FBP |
| 189 | 243 | 259 | 271 | 281 | 292 | 303 | 317 | 334 | 357 | 385 |

5.1.2 Additiv: Kammpolymer auf Basis von c) und d)

Kammpolymer aus Maleinsäureanhydrid-gepfropftem Ethylen-Vinylacetat-Copo-lymerwachs c) (Vinylacetat-gehalt 32 Masse%, Gehalt an Maleinsäureanhydrid 3,2 Masse%, Molmassen-Gewichtsmittel 3500 g/mol) und einem Ester aus Glycerin und einem Säuregemisch Erucasäure/Ölsäure/Linolsäure/- Linolensäure d) (Molverhältnis 6:1:1:1, Veresterungsgrad 74 Mol%)

Herstellung des Maleinsäureanhydrid gepfropften Copolymerwachses c) :

Ethylen-Vinylacetat-Copolymerwachs (Hersteller LEUNA Polymer GmbH, Vinyl-acetatgehalt 32 Masse%, Molmassen-Gewichtsmittel 2300 g/mol), mit 0,2 Masse% Talkum gepudert, wird nach DD 282 462 A5 bei 80°C im Extruder durch Eindosierung einer 1 Masse% Azoisobuttersäuredinitril und 30 Masse% Maleinsäureanhydrid enthaltenden Lösung in Aceton mit Maleinsäureanhydrid gepfropft und die Schmelze des Pfropfcopolymers auf eine Pastillierungsanlage mit Kühlband aufgegeben, in Pastillen ausgeformt und mit 0,2 Masse% Talkum gepudert.

Herstellung des Kammpolymers aus c) und d)

In den Einzugstrichter eines Werner&Pfleiderer - Doppelschneckenextruders ZSK 30, L/D 48, mit Seitenstromdosiereinrichtung für flüssige Medien und zwei Vacuumentgasungszonen, wird über eine Dosierbandwaage ein mit Maleinsäu-reanhydrid-gepfropftes Ethylen-Vinylacetat-Copolymerwachs c) (Vinylacetatge-halt 32 Masse%, Gehalt an Maleinsäureanhydrid 3,2 Masse%, Molmassen-Gewichtsmittel 3500 g/mol) mit 4,2 kg/h dosiert und bei 75°C aufgeschmolzen. Über die Seitenstromdosierung wird mit 1,2 kg/h aus einem bei 100°C beheizten Vorratstank ein Ester aus Glycerin und einem Säuregemisch Erucasäure/ Ölsäure/Linolsäure/Linolensäure d) (Molverhältnis 6:1:1:1), Veresterungsgrad 74 Mol%) in die Schmelze dosiert, in der ersten Reaktionszone (Verweilzeit 4,5 min) bei 115°C umgesetzt, entgast, in der zweiten Reaktionszone bei 130°C (Verweilzeit 3,5 min) umgesetzt, entgast, bei 100°C mittels Schmelzezahnrad-pumpe (Typ extrex SP, Maag pump systems) in einen selbstreinigenden Schmelzefilter gefördert und zur Formgebung in einer Pastillierungsanlage mit Kühlband in Pastillen ausgeformt.

Das resultierende Kammpolymer besitzt eine Säurezahl von 69 und einen Schmelzbereich von 72 bis 81°C.

5.1.3 Weitere Additivkomponenten

Styrol-Maleinsäureanhydrid-Copolymer, mit $C_{16}$-$C_{18}$-Fettamin teilimidisiert, Mol-massenzahlenmittel 11500 g/mol, Säurezahl 35

Ethylacrylat-Dodecylacrylat-Copolymer (Molverhältnis 1 : 2, Molmassen-Zahlen-mittel 13500)

5.2 Herstellung der Additivkomponenten enthaltenden Lösungen in Mineralöl-Mitteldestillaten

In einem Rührbehälter werden 25 kg einer 40%igen Lösung der weiteren Additiv-komponente Styrol-Malein-säureanhydrid-Copolymer, mit $C_{16}$-$C_{18}$-Fettamin teil-imidisiert, Molmassenzahlenmittel 11500 g/mol, Säurezahl 35 in $C_8$-$C_9$-Diesel-Aromatenfraktion, 50 kg einer 50%igen Lösung des Kammpolymers auf Basis von c) und d) in einem aromatischen Kohlenwasserstoffgemisch (Solvesso), und 15 kg einer 20%igen Lösung der weiteren Additivkomponente Ethylacrylat-Dodecylacrylat-Copolymer in Toluen 90 min bei 65°C gemischt, und die Mischung in einen Vorratstank überführt.

5.3 Herstellung des additivierten Mineralöls

In einen Produktstrom nichtadditiviertem Diesel Charge 16080601 bei 800 kg/min wird mit 0,48 kg/min die Additivlösung nach 5.2 eingespritzt und in einen Lagertank überführt.
Die Ausprüfung der Kältebeständigkeit der Mineralölrezeptur ergibt einen CFPP-Wert von -15°C. Der Lubricity-Test ergibt einen "wear scar diameter" von 405 $\mu$m.
Wird unter gleichen Bedingungen eine Mineralölrezeptur hergestellt, die ausschließlich das nichtmodifizierte Ethylen-Vinylacetat-Copolymerwachs als Additiv enthält, so beträgt der CFPP-Wert -3°C und der "wear scar diameter" von 520 $\mu$m.

Beispiel 6

6.1 Ausgangsprodukte

6.1.1 Unadditivierter Diesel

Charge : 030210 DGO
Charakterisierung :

    Cloud Point (CP): +7 °C ;
    Cold Filter Plugging Point (CFPP) : +2 °C
    Lubricity-Test : 556 $\mu$m

Siedeanalyse :

| Destillierte Menge (Vol.-%) / Temperatur (°C) | | | | | | | | | | |
|---|---|---|---|---|---|---|---|---|---|---|
| IBP | 10% | 20% | 30% | 40% | 50% | 60% | 70% | 80% | 90% | FBP |
| 235 | 266 | 279 | 291 | 301 | 310 | 320 | 337 | 342 | 357 | 374 |

6.1.2 Additiv: Mischung aus Copolymerwachs und Kammpolymer auf Basis von c) und d)

Mischung aus 15 Masse% Ethylen-Vinylacetat-Copolymerwachs (Hersteller LEUNA Polymer GmbH, Vinylacetatgehalt 32 Masse%, Molmassen-Gewichts-mittel 2300 g/mol) und 85 Masse% eines Kammpolymers aus einem oxidierten Ethylen-Vinylacetat-Copolymerwachs c) (Molmassen-Gewichtsmittel 950 g/mol, Säurezahl 27 mg KOH/g) und einem Ester aus Glycerin und einem Säuregemisch Erucasäure/Ölsäure d) (Molverhältnis 1:1, Veresterungsgrad 82 Mol%)

Herstellung des Kammpolymers auf Basis von c) und d)

In den Einzugtrichter eines Werner&Pfleiderer - Doppelschneckenextruders ZSK 30, L/D 48, mit Seitenstromdosiereinrichtung für flüssige Medien und zwei Vacuumentgasungszonen, wird über eine Dosierbandwaage mit 3,0 kg/h ein oxidiertes Ethylen-Vinylacetat-Copolymerwachs c) (Molmassen-Gewichtsmittel 950 g/mol, Säurezahl 27 mg KOH/g, dosiert und bei 80°C aufgeschmolzen. Über die Seitenstromdosierung wird mit 2,4 kg/h ein Ester aus Glycerin und einem Säuregemisch Erucasäure/Ölsäure d) (Molverhältnis 1:1, Veresterungsgrad 82 Mol%) in die Schmelze dosiert, in der ersten Reaktionszone (Verweilzeit 4,5 min) bei 115°C umgesetzt, entgast, in der zweiten Reaktionszone bei 130°C (Verweilzeit 4,5 min) umgesetzt, entgast, bei 100°C mittels Schmelzezahn-radpumpe (Typ extrex SP, Maag pump systems) in einen selbstreinigenden Schmelzefilter gefördert und zur Formgebung in einer Pastillierungsanlage mit Kühlband in Pastillen ausgeformt.

Das resultierende Kammpolymer besitzt eine Säurezahl von 7,5 und einen Schmelzbereich von 64 bis 72°C.

6.1.3 Weitere Additivkomponenten

Styrol-Maleinsäureanhydrid-Copolymer, mit $C_{16}$-$C_{18}$-Fettamin teilimidisiert, Mol-massenzahlenmittel 10500 g/mol, Säurezahl 45

Ethylacrylat-Butylacrylat-Copolymer (Molverhältnis 1 : 2, Molmassen-Zahlen-mittel 13500)

6.2 Herstellung der Additivkomponenten enthaltenden Lösungen in Mineral-öl-Mitteldestillaten

In einem Rührbehälter werden 25 kg einer 40%igen Lösung der weiteren Additiv-komponente Styrol-Maleinsäureanhydrid-Copolymer, mit $C_{16}$-$C_{18}$-Fettamin teilimi-disiert, in $C_8$-$C_9$-Diesel-Aromatenfraktion, 50 kg einer 60%igen Lösung der Mischung des Copolymerwachses mit dem Kammpolymer auf Basis von c) und d) in $C_8$-$C_9$-Diesel-Aromatenfraktion, und 15 kg einer 20%igen Lösung der weiteren Additivkomponente Ethylacrylat-Butylacrylat-Copolymer in Toluen 90 min bei 65°C gemischt, und die Mischung in einen Vorratstank überführt.

6.3 Herstellung des additivierten Mineralöls

In einen Produktstrom nichtadditiviertem Diesel Charge 030210 bei 800 kg/min wird mit 0,12 kg/min die Additivlösung nach 6.2 eingespritzt und in einen Lagertank überführt.

Die Ausprüfung der Kältebeständigkeit der Mineralölrezeptur ergibt einen CFPP-Wert von -9°C. Der Lubricity-Test ergibt einen "wear scar diameter" von 392 $\mu$m.

Wird unter gleichen Bedingungen eine Mineralölrezeptur hergestellt, die ausschließlich das Copolymerwachs als Additiv enthält, so beträgt der CFPP-Wert -5°C und der "wear scar diameter" 528 $\mu$m.

Beispiel 7

7.1 Ausgangsprodukte

7.1.1 Unadditiviertes Heizöl

Charge : 030225 Test HEL 1
Charakterisierung :

Cloud Point (CP): +1 °C ;
Cold Filter Plugging Point (CFPP) : -1 °C

Siedeanalyse :

| Destillierte Menge (Vol.-%) / Temperatur °C | | | | | | | | | | |
|------|------|------|------|------|------|------|------|------|------|------|
| IBP | 10% | 20% | 30% | 40% | 50% | 60% | 70% | 80% | 90% | FBP |
| 165 | 196 | 213 | 230 | 249 | 269 | 290 | 310 | 327 | 344 | 363 |

7.1.2 Additiv: Mischung aus Copolymerwachs und Kammpolymer auf Basis von c) und d)

Mischung aus 25 Masse% Ethylen-Vinylacetat-Copolymerwachs (Hersteller LEUNA Polymer GmbH, Vinylacetatgehalt 32 Masse%, Molmassen-Gewichts-mittel 2300 g/mol) und 75 Masse% eines Kammpolymers aus einem Ethylen-Vinylacetat-Butylacrylat-Acrylsäure-Copolymer c) (Molmassen-Gewichtsmittel 1500 g/mol, Säurezahl 35) und Glycerindioleylester d).

Herstellung des Kammpolymers aus c) und d)

In den Einzugtrichter eines Werner&Pfleiderer - Doppelschneckenextruders ZSK 30, L/D 48, mit Seitenstromdosiereinrichtung für flüssige Medien und zwei Vacuumentgasungszonen, wird über eine Dosierbandwaage ein Ethylen-Vinyl-acetat-Butylacrylat-Acrylsäure-Copolymer c) (Molmassen-Gewichtsmittel 1500 g/ mol, Säurezahl 35) mit 4,5 kg/h dosiert und bei 95°C aufgeschmolzen. Über die Seitenstromdosierung wird mit 1,6 kg/h Glycerindioleylester d) aus einem bei 100°C beheizten Vorratstank in die Schmelze dosiert, in der ersten Reak-tionszone (Verweilzeit 4,5 min) bei 105°C umgesetzt, entgast, in der zweiten Reaktionszone bei 130°C (Verweilzeit 4,0 min) umgesetzt, entgast, bei 100°C mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

Das resultierende Kammpolymer besitzt eine Säurezahl von 4,5 und einen Schmelzbereich von 57 bis 65°C.

7.1.3 Weitere Additivkomponenten

Octadecen-Maleinsäureanhydrid-Copolymer, mit $C_{16}$-$C_{18}$-Fettamin teilimidisiert, Molmassenzahlenmittel 3700 g/mol, Säurezahl 22

Polyethylenglycol Molmasse 650

7.2 Herstellung der Additivkomponenten enthaltenden Lösungen in Mineral-öl-Mitteldestillaten

In einen Rührbehälter werden 25 kg einer 40%igen Lösung der weiteren Additivkomponente Octadecen-Maleinsäureanhydrid-Copolymer in $C_8$-$C_9$-Diesel-Aromatenfraktion, 50 kg einer 60%igen Lösung des Kammpolymers auf Basis von c) und d) in $C_8$-$C_9$-Diesel-Aromatenfraktion, und 3 kg der weiteren Additivkomponente Polyethylenglycol eingetragen, 90 min bei 65°C gerührt, und die Mischung in einen Vorratstank überführt.

7.3 Herstellung des additivierten Mineralöls

In einen Produktstrom nichtadditiviertem Heizöl Charge 030225 bei 800 kg/min wird mit 0,24 kg/min die Additivlösung nach 7.2 eingespritzt und in einen Lagertank überführt.

Die Ausprüfung der Kältebeständigkeit der Mineralölrezeptur ergibt einen CFPP-Wert von -15°C.

Wird unter gleichen Bedingungen eine Mineralölrezeptur hergestellt, die ausschließlich das Copolymerwachs als Additiv enthält, so beträgt der CFPP-Wert -12°C.

Beispiel 8

8.1 Ausgangsprodukte

8.1.1 Unadditiviertes Heizöl

Charge : 030218 Test HEL 2,
Charakterisierung :

Cloud Point (CP): +2 °C ;
Cold Filter Plugging Point (CFPP) : -1 °C

Siedeanalyse :

| Destillierte Menge (Vol.-%) / Temperatur (°C) | | | | | | | | | | |
|------|------|------|------|------|------|------|------|------|------|------|
| IBP | 10% | 20% | 30% | 40% | 50% | 60% | 70% | 80% | 90% | FBP |
| 173 | 194 | 207 | 225 | 247 | 273 | 299 | 320 | 337 | 355 | 379 |

8.1.2 Additiv: Mischung des Kammpolymers auf Basis von c8) und d8) mit Copolymerwachs

Mischung aus 25 Masse% Ethylen-Vinylacetat-Copolymerwachs (Hersteller LEUNA Polymer GmbH, Vinylacetatgehalt 32 Masse%, Molmassen-Gewichts-mittel 2300 g/mol), und 75 Masse% eines Kammpolymers aus einem mit Methacrylsäuregepfropften Ethylen-Vinylacetat-Copolymerwachs c) (Vinylacetat-gehalt 28 Masse%, Gehalt an Methacrylsäure 4,5 Masse%, Molmassen-Gewichtsmittel 3200 g/mol) und Glycerindierucasäureester d).

Herstellung des mit Methacrylsäure gepfropften Copolymerwachses c) :

Ethylen-Vinylacetat-Copolymerwachs (Hersteller LEUNA Polymer GmbH, Vinyl-acetatgehalt 32 Masse%, Molmassen-Gewichtsmittel 2300 g/mol), mit 0,2 Masse% Talkum gepudert, wird nach DD 282 462 A5 bei 80°C im Extruder durch Eindosierung einer 0,5 Masse% Azoisobuttersäuredinitril und 50 Masse% Methacrylsäure enthaltenden Lösung in Aceton mit Methacrylsäure gepfropft und die Schmelze des Pfropfcopolymers auf eine Pastillierungsanlage mit Kühlband aufgegeben, in Pastillen ausgeformt und mit 0,2 Masse% Talkum gepudert.

Herstellung des Kammpolymers aus c) und d)

In den Einzugtrichter eines Werner&Pfleiderer - Doppelschneckenextruders ZSK 30, L/D 48, mit Seitenstromdosiereinrichtung für flüssige Medien und zwei Vacuumentgasungszonen, wird über eine Dosierbandwaage ein Methacrylsäure-gepfropftes Ethylen-Vinylacetat-Copolymerwachs c) (Vinylacetatgehalt 28 Mas-se%, Gehalt an Methacrylsäure 4,5 Masse%, Molmassen-Gewichtsmittel 3200 g/mol) mit 3,5 kg/h dosiert und bei 95°C aufgeschmolzen. Über die Seiten-stromdosierung wird mit 1,45 kg/h aus einem bei 100°C beheizten Vorratstank Glycerindierucasäureester d) in die Schmelze dosiert, in der ersten Reaktionszone (Verweilzeit 4,5 min) bei 125°C umgesetzt, entgast, in der zweiten Reaktionszone bei 135°C (Verweilzeit 3,5 min) umgesetzt, entgast, bei 100°C mittels Schmelzezahnradpumpe (Typ extrex SP, Maag pump systems) in einen selbstreinigenden Schmelzefilter gefördert und zur Formgebung in einer Pastillierungsanlage mit Kühlband in Pastillen ausgeformt.

Das resultierende Kammpolymer besitzt eine Säurezahl von 4,5 und einen Schmelzbereich von 55 bis 63°C.

8.1.3 Weitere Additivkomponenten

Friedel-Krafts-Kondensat aus chloriertem Polyethylenwachs mit Naphthalin, Molmassengewichtsmittel 850

8.2 Herstellung der Additivkomponenten enthaltenden Lösungen in Mineralöl-Mitteldestillaten

In einen Rührbehälter, der 2 kg einer 60%igen Lösung des Kammpolymers auf Basis von c) und d) in $C_8$-$C_9$-Diesel-Aromatenfraktion bei 65°C enthält, werden 1,2 kg einer 10%igen Lösung der weiteren Additivkomponente Friedel-Krafts-Kondensat aus chloriertem Polyethylenwachs mit Naphthalin in $C_8$-$C_9$-Diesel-Aromatenfraktion eingetragen, 120 min gerührt, und die Mischung in einen Vorratstank überführt.

8.3 Herstellung des additivierten Mineralöls

In einen Produktstrom nichtadditiviertes Heizöl, Charge 030218 bei 800 kg/min wird mit 0.28 kg/min die Additivlösung nach 8.2 eingespritzt und in einen Lagertank überführt.
Die Ausprüfung der Kältebeständigkeit der Mineralölrezeptur ergibt einen CFPP-Wert von -15°C.
Wird unter gleichen Bedingungen eine Mineralölrezeptur hergestellt, die ausschließlich das nichtmodifizierte Ethylen-Vinylacetat-Copolymerwachs (CW3) als Additiv enthält, so beträgt der CFPP-Wert -1°C.

**Patentansprüche**

1.   Mineralölzusammensetzung mit geringen Additivanteilen, **dadurch gekennzeichnet, dass** das Additiv ein Esterbindungen enthaltendes Kammpolymer
entweder auf Basis von

   a) durch Hydroxygruppen oder Glycidylgruppen modifizierten Ethylen-Vinylester-Copolymeren mit Molmassengewichtsmitteln von 3000 bis 50000 und einem Ethylenanteil von 50 bis 90 Masse%,
   und
   b) partiell imidisierten und/oder partiell veresterten Maleinsäureanhydrid-Copolymeren,
   ist,
   wobei in dem Kammpolymer auf Basis a) und b) die modifizierte Ethylen-Vinylester-Copolymer-Komponente mit der partiell imidisierten und/oder partiell veresterten Maleinsäureanhydrid-Copolymer-Komponente über Esterbindungen verknüpft ist,
   oder ein Esterbindungen enthaltendes Kammpolymer auf Basis von
   c) durch Säure- und/oder Säureanhydridgruppen modifizierten Ethylen-Vinylester-Copolymeren mit Molmassengewichtsmitteln von 3000 bis 50000 und einem Ethylenanteil von 50 bis 90 Masse%,
   und
   d) partiell mit $C_{12}$-$C_{40}$-Monocarbonsäuren veresterten Polyalkoholen
   ist,

wobei in dem Kammpolymer auf Basis von c) und d) die durch Säure- und/oder Säureanhydridgruppen modifizierte Ethylen-Vinylester-Copolymer - Komponente mit der partiell mit $C_{12}$-$C_{40}$-Monocarbonsäuren veresterten Polyalkohol - Komponente über Esterbindungen verknüpft ist,
und wobei der Gehalt des Kammpolymers im Mineralöl 0,005 bis 1 Masse%, und das Masseverhältnis der Segmente Kammpolymersegment a / Kammpolymersegment b auf Basis der Komponenten a und b oder der Segmente Kammpolymersegment c / Kammpolymersegment d auf Basis der Komponenten c und d jeweils 10 : 90 bis 90 : 10 beträgt.

2.   Mineralölzusammensetzung nach Anspruch 1, **dadurch gekennzeichnet, dass** in dem Kammpolymer auf Basis a) und b) die durch Hydroxygruppen modifizierten Ethylen-Vinylester-Copolymere oxidierte Ethylen-Vinylacetat-Copolymere mit Molmassen-Zahlenmitteln von 800 bis 5000 und OH-Zahlen von 10 bis 150 mg KOH/g, oder teilverseifte Ethylen-Vinylacetat-Copolymere mit Molmassen-Zahlenmitteln von 800 bis 5000, bei denen 3 bis 30 Mol% der Vinylacetateinheiten verseift vorliegen, oder Halbacetale von Ethylen-Vinylester-Vinylalkohol-Copolymeren mit Butyraldehyd, sind.

3.   Mineralölzusammensetzung nach Anspruch 1, **dadurch gekennzeichnet, dass** in dem Kammpolymer auf Basis a) und b) die durch Hydroxygruppen oder Glycidylgruppen modifizierten Ethylen-Vinylester-Copolymere 3 bis 20 Masse% polare ungesättigte Monomeren vom Typ Hydroxy-$C_2$-$C_{24}$-alkyl(meth)acrylester oder Glycidyl(meth)acrylester als Comonomerkomponente im Ethylen-Vinylester-Copolymer oder aufgepfropft auf das Ethylen-Vinylester-Copolymere enthalten.

4.  Mineralölzusammensetzung nach einem oder mehreren der Ansprüche 1 bis 3, **dadurch gekennzeichnet, dass** die in dem Kammpolymer auf Basis a) und b) über Esterbindungen verknüpft enthaltenen partiell imidisierten Maleinsäureanhydrid-Copolymere partiell mit $C_6$-$C_{24}$-Monoalkylaminen imidisierte Maleinsäureanhydrid-$\alpha$-Methylstyrol-Copolymere sind, bei denen das Molverhältnis Anhydridgruppen im Copolymer / gebundenes $C_6$-$C_{24}$-Monoalkylamin im Copolymer 4: 1 bis 1,1 : 1 beträgt.

5.  Mineralölzusammensetzung nach Anspruch 1, **dadurch gekennzeichnet, dass** in dem Kammpolymer auf Basis von c) und d) die durch Säuregruppen modifizierten Ethylen-Vinylester-Copolymere oxidierte Ethylen-Vinylacetat-Copolymere mit Molmassen-Zahlenmitteln von 800 bis 5000 und Säurezahlen von 5 bis 40 mg KOH/g sind.

6.  Mineralölzusammensetzung nach Anspruch 1, **dadurch gekennzeichnet, dass** in dem Kammpolymer auf Basis von c) und d) die durch Säure- und/oder Säureanhydridgruppen modifizierten Ethylen-Vinylester-Copolymere Copolymere aus Ethylen, Vinylestern und 1 bis 20 Masse% ungesättigten Carbonsäuren und/oder Carbonsäureanhydriden, bevorzugt Acrylsäure, Methacrylsäure und/oder Maleinsäureanhydrid, oder mit 1 bis 20 Masse% ungesättigten Carbonsäuren und/oder Carbonsäureanhydriden, vorzugsweise Acrylsäure, Methacrylsäure und/oder Maleinsäureanhydrid, gepfropfte Ethylen-Vinylester-Copolymere, sind.

7.  Mineralölzusammensetzung nach einem oder mehreren der Ansprüche 1, 5 und 6, **dadurch gekennzeichnet, dass** in dem Kammpolymer auf Basis von c) und d) die partiell mit $C_{12}$-$C_{40}$-Monocarbonsäuren veresterten Polyalkohole Glycerinester von ungesättigten $C_{16}$-$C_{24}$-Monocarbonsäuren sind, wobei der Anteil von $C_{22}$-Monocarbonsäuren, bezogen auf die Gesamtmasse der $C_{16}$-$C_{24}$ Monocarbonsäuren, 45 bis 52 Masse% beträgt.

8.  Mineralölzusammensetzung nach einem oder mehreren der Ansprüche 1 bis 7, **dadurch gekennzeichnet, dass** die Mineralöle Rohöle oder Brennstofföle aus einem Mitteldestillat mit einem Schwefelgehalt unter 0,05 Masse%, bevorzugt Heizöle, Gasöle oder Dieselöle, sind.

9.  Mineralölzusammensetzung nach einem oder mehreren der Ansprüche 1 bis 8, **dadurch gekennzeichnet, dass** die Mineralölzusammensetzungen insgesamt 0 bis 200 Masse%, bezogen auf das Kammpolymer, weitere Additivkomponenten vom Typ Fettsäuregemische, polare Stickstoffverbindungen, bevorzugt Polyamine, Etheramine, Aminoalkohole, Aminsalze, Amide oder Imide von mehrwertigen Carbonsäuren; modifizierte Copolymere von ethylenisch ungesättigten $C_4$-$C_{20}$-Dicarbonsäureanhydriden, nichtmodifizierte Ethylen-Vinylester-Copolymere, $C_7$-$C_{30}$-Alkohole, Polyalkylenglycole, Ester oder Ether von Polyoxyalkylenverbindungen, $C_2$-$C_6$-oxyalkylverbrückte $C_{12}$-$C_{40}$-Monocarbonsäuren, vorzugsweise $C_3$-$C_4$-oxyalkylverbrückte ungesättigte $C_{16}$-$C_{24}$ Monocarbonsäuren mit einem Anteil von $C_{22}$-Monocarbonsäuren, bezogen auf die Gesamtmasse der $C_{16}$-$C_{24}$ Monocarbonsäuren, von 45 bis 52 Masse%, Kohlenwasserstoffpolymere, Alkylphenol-Aldehyd-Copolymere, aromatische Verbindungen mit $C_8$-$C_{100}$-Alkylsubstituenten, carboxylierte Polyamine, Detergentien, Korrosionsinhibitoren, Demulgatoren, Metalldesaktivatoren, Cetanverbesserer, Entschäumer und/oder Cosolventien enthält.

10. Verfahren zur Herstellung von Mineralölzusammensetzungen mit geringen Additivanteilen, **dadurch gekennzeichnet, dass** Mineralölzusammensetzungen, die als Additiv ein Esterbindungen enthaltendes Kammpolymer entweder auf Basis von

    a) durch Hydroxygruppen oder Glycidylgruppen modifizierten Ethylen-Vinylester-Copolymeren mit Molmassengewichtsmitteln von 3000 bis 50000 und einem Ethylenanteil von 50 bis 90 masse%, und
    b) partiell imidisierten und/oder partiell veresterten Maleinsäureanhydrid-Copolymeren,
    ist,
    wobei in dem Kammpolymer auf Basis a) und b) die modifizierte Ethylen-Vinylester-Copolymer-Komponente mit der partiell imidisierten und/oder partiell veresterten Maleinsäureanhydrid-Copolymer-Komponente über Esterbindungen verknüpft ist,
    oder ein Esterbindungen enthaltendes Kammpolymer auf Basis von
    c) durch Säure- und/oder Säureanhydridgruppen modifizierten Ethylen-Vinylester-Copolymeren mit Molmassengewichtsmitteln von 3000 bis 50000 und einem Ethylenanteil von 50 bis 90 Masse%,
    und
    d) partiell mit $C_{12}$-$C_{40}$-Monocarbonsäuren veresterten Polyalkoholen
    ist,

wobei in dem Kammpolymer auf Basis von c) und d) die durch Säure- und/oder Säureanhydridgruppen modifizierte Ethylen-Vinylester-Copolymer - Komponente mit der partiell mit $C_{12}$-$C_{40}$-Monocarbonsäuren veresterten Polyalkohol - Komponente über Esterbindungen verknüpft ist,

und wobei der Gehalt des Kammpolymers im Mineralöl 0,005 bis 1 Masse%, und das Masseverhältnis der Segmente Kammpolymersegment a / Kammpolymersegment b auf Basis der Komponenten a und b oder der Segmente Kammpolymersegment c / Kammpolymersegment d auf Basis der Komponenten c und d jeweils 10 : 90 bis 90 : 10 beträgt, nach einem Vorhomogenisierungsverfahren hergestellt werden, bei dem

- in der ersten Verfahrensstufe 1 bis 60 Masse% Kammpolymer enthaltende Lösungen in Mineralöl-Mitteldestillaten bei 20 bis 90°C hergestellt werden, und
- in der zweiten Verfahrensstufe die das Kammpolymer enthaltenden Lösungen mit dem Mineralöl als Hauptkomponente homogenisiert werden,

wobei dem Mineralöl insgesamt 0 bis 200 Masse%, bezogen auf das Kammpolymer, weitere Additivkomponenten in der ersten oder zweiten Verfahrensstufe zugesetzt werden.

11. Verwendung von Mineralölzusammensetzungen nach einem oder mehreren der Ansprüche 1 bis 9 als bei niedrigen Temperaturen zu transportierende fließfähige Medien und als Mineralölkraftstoff hoher Fliessfähigkeit.

**Claims**

1. A mineral oil composition having a low additive content, **characterised in that** the additive is an ester bond-containing comb polymer

based either on

a) ethylene vinyl ester copolymers modified by hydroxyl groups or glycidyl groups having a weight average molar mass of 3000 to 50000 and an ethylene content of 50 to 90 % by mass,
and
b) partly imidized and/or partly esterified maleic anhydride copolymers,
the modified ethylene vinyl ester copolymer components being linked with the partly imidized and/or partly esterified maleic anhydride copolymer components via ester bonds in the comb polymer based on a) and b)
or an ester bonds-containing comb polymer based on
c) ethylene vinyl ester copolymers modified by acid groups and/or acid anhydride groups and having a weight average molar mass of 3000 to 50000 and an ethylene content of 50 to 90 % by mass,
and
d) polyalcohols esterified in part by $C_{12}$ - $C_{40}$ monocarboxylic acids,

the ethylene vinyl ester copolymer components modified by acid groups and/or acid anhydride groups being linked with the polyalcohol components esterified in part by $C_{12}$ - $C_{40}$ monocarboxylic acids via ester bonds in the comb polymer based on c) and d),
and the content of the comb polymer in the mineral oil being 0.005 to 1 % by mass, and the segments mass ratio of comb polymer segment a/comb polymer segment b based on components a and b, or of comb polymer segment c/comb polymer segment d based on components c and d being 10:90 to 90:10 in each case.

2. The mineral oil composition according to claim 1, **characterised in that**, in the comb polymer based on a) and b), the ethylene vinyl ester copolymers modified by hydroxyl groups are oxidised ethylene vinyl acetate copolymers having a mean molar mass of 800 to 5000 and OH numbers of 10 to 150 mg KOH/g, or partly saponified ethylene vinyl acetate copolymers having a mean molar mass of 800 to 500, in which 3 to 30 mol % of the vinyl acetate units are saponified, or hemiacetals of ethylene vinyl ester vinyl alcohol copolymers with butyraldehyde.

3. The mineral oil composition according to claim 1, **characterised in that**, in the comb polymer based on a) and b) the ethylene vinyl ester copolymers modified by hydroxyl groups or glycidyl groups contain 3 to 20 % by mass of polar unsaturated monomers of the hydroxy-$C_2$-$C_{24}$-alkyl(meth) acrylic ester or glycidyl(meth)acrylic ester type as comonomer components in the ethylene vinyl ester copolymer or grafted onto the ethylene vinyl ester copolymers.

4. The mineral oil composition according to any one or more of claims 1 to 3, **characterised in that** the partly imidized maleic anhydride copolymers contained in the comb polymer based on a) and b), linked by ester bonds, are maleic

anhydride-$\alpha$-methylstyrene copolymers imidized in part by $C_6$-$C_{24}$-monoalkyl amines, in which the molar ratio of anhydride groups in the copolymer/$C_6$-$C_{24}$-monoalkyl amine bonded in the copolymer is 4:1 to 1.1:1.

5. The mineral oil composition according to claim 1, **characterised in that**, in the comb polymer based on c) and d), the ethylene vinyl ester copolymers modified by acid groups are oxidised ethylene vinyl acetate copolymers having a mean molar mass of 800 to 5000 and acid values of 5 to 40 mg KOH/g.

6. The mineral oil composition according to claim 1, **characterised** that, in the comb polymer based on c) and d), the ethylene vinyl ester copolymers modified by acid groups and/or acid anhydride groups are copolymers of ethylene, vinyl esters and 1 to 20 % by mass of unsaturated carboxylic acids and/or carboxylic acid anhydrides, preferably acrylic acid, methacrylic acid and/or maleic anhydride, or ethylene vinyl ester copolymers grafted with 1 to 20 % by mass of unsaturated carboxylic acids and/or carboxylic acid anhydrides, preferably acrylic acid, methacrylic acid and/or maleic anhydride.

7. The mineral oil composition according to any one or more of claims 1, 5 and 6, **characterised in that**, in the comb polymer based on c) and d), the polyalcohols esterified in part by $C_{12}$-$C_{40}$-monocarboxylic acids are glycerides of unsaturated $C_{16}$-$C_{24}$-monocarboxylic acids, the content of $C_{22}$-monocarboxylic acids being 42 to 52 % by mass, based on the total mass of the $C_{16}$-$C_{24}$ monocarboxylic acids.

8. The mineral oil composition according to any one or more of claims 1 to 7, **characterised in that** the mineral oils are crude oils or fuel oils from a middle distillate having a sulphur content of less than 0.05% by mass, preferably fuel oils, gas oils or diesel oils.

9. The mineral oil composition according to any one or more of claims 1 to 8, **characterised in that** the mineral oil compositions contain a total of 0 to 200 % by mass, based on the comb polymer, of further additive components of the fatty acid mixture or polar nitrogen compound type, preferably polyamines, ether amines, amino alcohols, amino salts, amides or imides of multivalent carboxylic acids; modified copolymers of ethylenically unsaturated $C_4$-$C_{20}$-dicarboxylic acid anhydrides, unmodified ethylene vinyl ester copolymers, $C_7$-$C_{30}$ alcohols, polyalkylene glycols, esters or ethers of polyoxyalkylene compounds, $C_2$-$C_6$-oxyalkyl-bridged $C_{12}$-$C_{40}$-monocarboxylic acids, preferably $C_3$-$C_4$-oxyalkyl-bridged unsaturated $C_{16}$-$C_{24}$ monocarboxylic acids having a content of $C_{22}$-monocarboxylic acids, based on the total mass of the $C_{16}$-$C_{24}$ monocarboxylic acids, of 45 to 52% by mass, hydrocarbon polymers, alkyl phenol aldehyde copolymers, aromatic compounds having $C_8$-$C_{100}$ alkyl substituents, carboxylated polyamines, detergents, corrosion inhibitors, demulsifying agents, metal deactivators, cetane improvers, antifoaming agents and/or cosolvents.

10. A method for producing mineral oil compositions having a low additive content, **characterised in that** mineral oil compositions that contain, as an additive, an ester bond-containing comb polymer
based either on

a) ethylene vinyl ester copolymers modified by hydroxyl groups or glycidyl groups and having a weight average molar mass of 3000 to 50000 and an ethylene content of 50 to 90% by mass, and
b) partly imidized and/or partly esterified maleic anhydride copolymers,
the modified ethylene vinyl ester copolymer components being linked with the partly imidized and/or partly esterified maleic anhydride copolymer components via ester bonds in the comb polymer based on a) and b),
or an ester bonds-containing comb polymer based on
c) ethylene vinyl ester copolymers modified by acid groups and/or acid anhydride groups having a weight average molar mass of 3000 to 50000 and an ethylene content of 50 to 90% by mass,
and
d) polyalcohols esterified in part by C12 - C40 monocarboxylic acids,

the ethylene vinyl ester copolymer components modified by acid groups and/or acid anhydride groups being linked with the polyalcohol components esterified in part by $C_{12}$ - $C_{40}$ monocarboxylic acids via ester bonds in the comb polymer based on c) and d),
and the content of the comb polymer in the mineral oil being 0.005 to 1% by mass, and the segments mass ratio of the comb polymer segment a/comb polymer segment b based on components a and b, or of comb polymer segment c/comb polymer segment d based on components c and d being 10:90 to 90:10 in each case are produced by a primary homogenisation method, in which

- in the first method step 1 to 60% by mass of solutions containing comb polymer are produced in mineral oil middle distillates at 20 to 90 °C, and
- in the second method step the solutions containing the comb polymer are homogenised with the mineral oil as a main component,

a total of 0 to 200% by mass, based on the comb polymer, of further additive components being added to the mineral oil in the first or second method step.

**11.** The use of mineral oil compositions according to any one or more of claims 1 to 9 as free-flowing media to be transported at low temperatures and as mineral oil fuel having a high level of flowability.


**Revendications**

**1.** Composition de pétrole ayant de faibles taux d'additif, **caractérisée en ce que** ledit additif est un polymère en peigne contenant des liaisons ester à base de

a) copolymères d'éthylène / ester vinylique modifiés avec des groupes hydroxyle ou des groupes glycidyle et dont la masse moléculaire moyenne en poids est comprise entre 3 000 et 50 000 et dont la proportion d'éthylène est comprise entre 50 et 90 % en poids
et
b) de copolymères d'anhydride maléique partiellement imidisés et/ou partiellement estérifiés,
ledit composant de type copolymère d'éthylène / ester vinylique modifié étant, au sein dudit polymère en peigne à base de a) et de b), lié au travers de liaisons ester au composant de type copolymère d'anhydride maléique partiellement imidisé et/ou partiellement estérifié,
ou bien ledit polymère en peigne contenant des liaisons ester est à base de
c) copolymères d'éthylène / ester vinylique modifiés avec des groupes d'acide ou d'anhydride d'acide et dont la masse moléculaire moyenne en poids est comprise entre 3 000 et 50 000 et dont la proportion d'éthylène est comprise entre 50 et 90% en poids,
et
d) de polyalcools partiellement estérifiés avec des acides monocarboxyliques en $C_{12}$-$C_{40}$,

ledit composant de type copolymère d'éthylène / ester vinylique modifié avec des groupes d'acide ou d'anhydride d'acide étant, au sein dudit polymère en peigne à base de c) et de d), lié au travers de liaisons ester audit composant de type polyalcool partiellement estérifié avec des acides monocarboxyliques en $C_{12}$-$C_{40}$,
et la teneur dudit polymère en peigne dans ledit pétrole étant comprise entre 0,005 et 1 % en poids et le rapport massique entre les segments dits segment de polymère en peigne a / segment de polymère en peigne b à base des composants a et b ou entre les segments dits segment de polymère en peigne c / segment de polymère en peigne d à base des composants c et d étant, respectivement, compris entre 10 : 90 et 90 : 10.

**2.** Composition de pétrole selon la revendication 1, **caractérisée en ce que**, au sein dudit polymère en peigne à base de a) et de b), lesdits copolymères d'éthylène / ester vinylique modifiés avec des groupes hydroxyle sont des copolymère d'éthylène / acétate de vinyle oxydés dont les masses moléculaires moyennes en nombre sont comprises entre 800 et 5 000 et dont les indices OH sont compris entre 10 et 150 mg KOH/g, ou des copolymères d'éthylène / acétate de vinyle partiellement saponifiés dont les masses moléculaires moyennes en nombre sont comprises entre 800 et 5 000, le pourcentage molaire des unités d'acétate de vinyle saponifiées étant compris entre 3 et 30%, ou des hémiacétals que les copolymères d'éthylène / ester vinylique / alcool vinylique forment avec du butyraldéhyde.

**3.** Composition de pétrole selon la revendication 1, **caractérisée en ce que**, au sein du polymère en peigne à base de a) et de b), lesdits copolymères d'éthylène / ester vinylique modifiés avec des groupes hydroxyle ou des groupes glycidyle contiennent de 3 à 20 % en poids de monomères polaires insaturés de type ester (méth) acrylique d'hydroxyalkyle en $C_2$-$C_{24}$ ou ester (méth)acrylique de glycidyle, soit sous forme de composant de type comonomère au sein dudit copolymère d'éthylène / ester vinylique soit greffés sur ledit copolymère d'éthylène / ester vinylique.

**4.** Composition de pétrole selon une ou plusieurs des revendications 1 à 3, **caractérisée en ce que** lesdits copolymères d'anhydride maléique partiellement imidisés, qui sont contenus dans ledit polymère en peigne à base de a) et b) et liés au travers de liaisons ester, sont des copolymères d'anhydride maléique / α-méthylstyrène partiellement imidisés avec des monoalkylamines en $C_6$-$C_{24}$ chez lesquels le rapport molaire entre les groupes anhydride au sein du copolymère / la monoalkylamine en $C_6$-$C_{24}$ liée au sein du copolymère, est compris entre 4 : 1 et 1,1 : 1.

5. Composition de pétrole selon la revendication 1, **caractérisée en ce que**, au sein dudit polymère en peigne à base de c) et de d), les copolymères d'éthylène / ester vinylique modifiés avec des groupes acide, sont des copolymères d'éthylène / acétate de vinyle ayant des masses moléculaires moyennes en nombre comprises entre 800 et 5 000 et des indices d'acide compris entre 5 et 40 mg KOH/g.

6. Composition de pétrole selon la revendication 1, **caractérisée en ce que**, au sein dudit polymère en peigne à base de c) et de d), lesdits copolymères d'éthylène / ester vinylique modifiés avec des groupes d'acide ou d'anhydride d'acide, sont des copolymères réalisés à partir d'éthylène, d'esters vinyliques et 1 à 20 % en poids d'acides carboxyliques et/ou d'anhydrides d'acides carboxyliques insaturés, s'agissant préférentiellement d'acide acrylique, d'acide méthacrylique et/ou d'anhydride maléique, ou bien des copolymères d'éthylène / ester vinylique sur lesquels sont greffés des acides carboxyliques et/ou des anhydrides d'acides carboxyliques insaturés, s'agissant préférentiellement d'acide acrylique, d'acide méthacrylique et/ou d'anhydride maléique, représentant 1 à 20 % en poids.

7. Composition de pétrole selon une ou plusieurs des revendications 1, 5 et 6, **caractérisée en ce que**, au sein dudit polymère en peigne à base de c) et de d), lesdits polyalcools partiellement estérifiés avec des acides monocarboxyliques en $C_{12}$-$C_{40}$ sont des esters que le glycérol forme avec des acides monocarboxyliques en $C_{16}$-$C_{24}$ insaturés, la proportion des acides monocarboxyliques en $C_{22}$ étant comprise entre 45 et 52 % en poids, par rapport au poids total desdits acides monocarboxyliques en $C_{16}$-$C_{24}$.

8. Composition de pétrole selon une ou plusieurs des revendications 1 à 7, **caractérisée en ce que** les pétroles sont des pétroles bruts ou bien des carburants liquides composés d'un distillat moyen avec une teneur un soufre inférieure à 0,05 % en poids, s'agissant préférentiellement de mazouts, de gasoils ou de carburants diésel.

9. Composition de pétrole selon une ou plusieurs des revendications 1 à 8, **caractérisée en ce que** lesdites compositions de pétrole contiennent, à titre d'additifs, un total de 0 à 200 % poids, par rapport audit polymère en peigne, d'autres composants de type mélanges d'acides gras, composés azotés polaires, s'agissant préférentiellement de polyamines, d'aminoéthers, d'aminoalcools, de sels d'amines, d'amides ou d'imides de acides carboxyliques à plusieurs groupes fonctionnels; copolymères modifiés d'anhydrides d'acides carboxyliques en $C_4$-$C_{20}$ éthyléniquement insaturés, copolymères d'éthylène / ester vinylique non-modifiés, alcools en $C_7$-$C_{30}$, polyalkylèneglycols, esters ou éther de composés à base de polyoxyalkylène, acides monocarboxyliques en $C_{12}$-$C_{40}$ reliés par un pont en $C_2$-$C_6$-oxyalkyle, s'agissant préférentiellement d'acides monocarboxyliques en $C_{15}$-$C_{24}$ insaturé et reliés par un pont en $C_3$-$C_4$-oxyalkyle, la proportion des acides monocarboxyliques en $C_{22}$ étant comprise entre 45 et 52 % en poids, par rapport au poids total desdits acides monocarboxyliques en $C_{16}$-$C_{24}$, polymères d'hydrocarbures, copolymères d'alkylphénol / aldéhyde, composés aromatiques avec des substituants alkyle en $C_8$-$C_{100}$, polyamines carboxylées, détergents, inhibiteurs de corrosion, démulsifiants, agents de désactivation de métaux, agents destinés à améliorer l'indice de cétane, agents anti-mousse et/ou co-solvants.

10. Procédé de fabrication de compositions de pétrole ayant de faibles taux d'additif, **caractérisé en ce que** des compositions de pétrole ayant, à titre d'additif, un polymère en peigne contenant des liaisons ester soit à base de

a) copolymères d'éthylène / ester vinylique modifiés avec des groupes hydroxyle ou des groupes glycidyle et dont la masse moléculaire moyenne en poids est comprise entre 3 000 et 50 000 et dont la proportion d'éthylène est comprise entre 50 et 90 % en poids, et
b) de copolymères d'anhydride maléique partiellement imidisés et/ou partiellement estérifiés,
ledit composant de type copolymère d'éthylène / ester vinylique modifié étant, au sein dudit polymère en peigne à base de a) et de b), lié au travers de liaisons ester audit composant de type copolymère d'anhydride maléique partiellement imidisé et/ou partiellement estérifié,
ou bien un polymère en peigne contenant des liaisons ester à base de
c) copolymères d'éthylène / ester vinylique modifiés avec des groupes d'acide ou d'anhydride d'acide et dont la masse moléculaire moyenne en poids est comprise entre 3 000 et 50 000 et dont la proportion d'éthylène est comprise entre 50 et 90 % en poids,
et
d) de polyalcools partiellement estérifiés avec des acides monocarboxyliques en $C_{12}$-$C_{40}$,

ledit composant de type copolymère d'éthylène / ester vinylique modifié avec des groupes d'acide ou d'anhydride d'acide étant, au sein dudit polymère en peigne à base de c) et de d), lié au travers de liaisons ester audit composant de type polyalcool partiellement estérifié avec des acides monocarboxyliques en $C_{12}$-$C_{40}$,
et la teneur dudit polymère en peigne dans ledit pétrole étant comprise entre 0,005 et 1 % en poids et le rapport massique entre les segments dits segment de polymère en peigne a / segment de polymère en peigne b à base des composants a et b ou entre les segments dits segment de polymère en peigne c / segment de polymère en peigne d à base des composants c et d étant, respectivement, compris entre 10 : 90 et 90 : 10,
sont fabriqué selon un procédé de pré-homogénéisation, dans lequel

    - dans la première étape, on produit à des températures comprises entre 20 et 90 °C des solutions contenant 1 à 60 % en poids de polymère en peigne dans des distillats moyens de pétrole, et
    - dans la deuxième étape, lesdites solutions contenant le polymère en peigne sont homogénéisées avec le pétrole en tant que composant principal,

d'autres composants étant ajoutés audit pétrole dans la première ou la deuxième étape, à titre d'additif et dans une quantité comprise entre 0 et 200 % en poids, par rapport audit polymère en peigne.

11. Utilisation de compositions de pétrole selon une ou plusieurs des revendications 1 à 9 en tant que médias pouvant être transportés à l'état liquide à basse température ou en tant carburant pétrolier à faible viscosité.

**EP 1 675 881 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9410267 A1
- WO 9533012 A1
- EP 0921183 A1
- WO 9314178 A1
- EP 0899323 A1
- EP 0485774 A1
- US 3491047 A
- DD 228288 A1
- DD 295507 A7
- DD 282462 A5
- DD 293125 B5
- DD 293125 A5